# EUROPEAN PATENT APPLICATION

(11) **EP 4 779 465 A1**
(43) Date of publication of application: **22.07.2026**
(21) Application number: 24887550.2
(22) Date of filing: 16.08.2024
(51) Int. Cl.: G06F 9/451

(54) **INFORMATION DISPLAY METHOD AND ELECTRONIC DEVICE**

(30) Priority: 08.11.2023 CN 202311485016; 09.01.2024 CN 202410040769
(71) Applicant: Honor Device Co., Ltd., Shenzhen, Guangdong 518040 (CN)
(72) Inventor: DING, Yiyan, Shenzhen, Guangdong 518040 (CN); HUANG, Liwei, Shenzhen, Guangdong 518040 (CN)
(74) Representative: Gill Jennings & Every LLP
(86) International application number: PCT/CN2024/112919
(87) International publication number: WO 2025/097930

(57) **Abstract**

Embodiments of this application provide an information display method and an electronic device, and relate to the field of interaction technologies, to resolve a problem that operability of an interface element in a status bar is poor. A specific solution includes: displaying a first interface, where a status bar is displayed on the first interface, and a through hole is located in a display region of the status bar; displaying a first control on the status bar, where a display region of the first control surrounds the through hole, and the first control is used to push first information; canceling display of the first control in response to a first operation of a user; and redisplaying the first control on the status bar after a second operation performed by the user on the status bar is detected.

## Description

This application claims priority to Chinese Patent Application No. 202311485016.1, filed with the China National Intellectual Property Administration on November 8, 2023 and entitled "CAPSULE WINDOW INTERACTION METHOD AND ELECTRONIC DEVICE", and Chinese Patent Application No. 202410040769.X, filed with the China National Intellectual Property Administration on January 9, 2024 and entitled "INFORMATION DISPLAY METHOD AND ELECTRONIC DEVICE", which are incorporated herein by reference in their entireties.

### TECHNICAL FIELD

Embodiments of this application relate to the field of interaction technologies, and in particular, to an information display method and an electronic device.

### BACKGROUND

With electronic device iteration, increasingly more types of applications (Application, APP) can be installed on an electronic device and increasingly more types of services can be provided. Correspondingly, the APPs and the services provide increasingly more notification messages. Currently, an electronic device may push a notification message of an APP or a service by using a status bar. However, operability of a pushed object displayed on the status bar is poor, affecting human-computer interaction efficiency of the electronic device.

### SUMMARY

In view of this, this application provides an information display method and an electronic device, to improve human-computer interaction efficiency of the electronic device by improving operability of an interface element on a status bar.

To achieve the foregoing objective, the following technical solutions are used in embodiments of this application.

According to a first aspect, an embodiment of this application provides an information display method, which may be applied to an electronic device. A through hole configured to embed a camera is disposed on a display screen of the electronic device. The electronic device may display a first interface. The first interface may be any user interface of the electronic device, for example, may be a main interface. A status bar is displayed on the first interface, and the status bar may be floated and displayed above the user interface displayed by the electronic device.

It may be understood that the through hole disposed on the display screen can house a front-facing camera of the electronic device and increase a display area of the electronic device as much as possible. In some embodiments, a display region of the status bar surrounds the through hole. For example, both display regions on a left side and a right side of the through hole may be used to display an interface element on the status bar. In this way, the electronic device can make full use of the display region divided by the through hole.

In an example scenario, a first control may be displayed on the status bar. The first control may be an interface element in a capsule form, or certainly may be an interface element in another form. A display location of the first control is related to a location of the through hole, so that a display region of the first control can surround the through hole. Visually, the first control is integrated with the through hole. The electronic device may push first information to a user by using the first control, to make full use of a display area of the status bar.

During display of the first control on the status bar, the electronic device may further cancel display of the first control in response to a first operation of the user, and redisplay the first control on the status bar after detecting a second operation performed by the user on the status bar.

It can be learned that in the foregoing embodiment, the user may hide or redisplay the first control on the status bar by performing an operation on the status bar, thereby improving interactivity of the interface element (the first control) whose display region surrounds the through hole. In practical application, the user may hide a first capsule by performing a simple operation, to prevent the first information pushed by the first control from causing interference to the user. In addition, the user may trigger, by performing a simple operation, the electronic device to restore display of the first control used to push the first information, to facilitate checking the hidden first information, thereby improving operability of the first control on the status bar, and improving human-computer interaction efficiency of the device.

In some embodiments, the electronic device detects a second operation of the user after canceling display of the first control. For example, the second operation may be a swipe-down operation relative to the status bar. It may be understood that the swipe-down operation relative to the status bar may be an operation in which a start point of a swiping trajectory is located in a touch hot zone of the status bar. For example, the second operation may be an operation in which a start point of a swiping trajectory is located in a touch hot zone near the through hole in the status bar. For another example, the second operation may be an operation in which a start point of a swiping trajectory is located at any location in a touch hot zone of the status bar.

In some examples, the electronic device displays a notification center interface in response to the second operation, where the notification center interface includes a notification card used to push the first information. The first interface is displayed again in response to an operation of the user that indicates to cancel display of the notification center interface. In addition, the first control is redisplayed on the status bar, and the redisplayed first control continues to push the first information.

In some other examples, the electronic device redisplays the first control on the status bar in response to the second operation after canceling display of the first control, and the redisplayed first control continues to push the first information.

In a possible embodiment, for some types of second operations (for example, the second operation in which the start point is located in the touch hot zone near the through hole or a second operation in which a length of a swiping trajectory is less than a preset threshold), the electronic device may directly redisplay the first control on the status bar without performing the step of displaying the notification center interface. For other types of second operations (for example, an operation in which a swiping trajectory is greater than or equal to a preset threshold), the electronic device needs to display the notification center interface first. The electronic device redisplays the first control on the status bar after exiting the notification center interface.

In the foregoing embodiment, the second operation is swipe-down relative to the status bar, which is more in line with an operation habit of the user. In addition, there may be various types of second operations, the user can finally redisplay the first control on the status bar regardless of a type of the second operation, thereby reducing difficulty and complexity of the user in indicating redisplay of the first control, and improving human-computer interaction efficiency of the electronic device.

In some embodiments, the first operation includes a swipe-up operation relative to the first control. The swipe-up operation relative to the first control refers to a swipe operation in which a start point of a swiping trajectory is located in a touch hot zone of the first control.

In the foregoing embodiment, display of the interface element (the first control) on the status bar is canceled in a swipe-up manner, which is more in line with an operation habit of the user, thereby improving human-computer interaction efficiency of the device.

In some embodiments, when the first control is displayed on the status bar, the electronic device may further display a second control on the status bar, where the second control may be overlaid on and displayed above the first control, and the second control may be used to push second information.

In the foregoing embodiment, the electronic device may push, in real time by using the status bar, different information that needs to be pushed, thereby improving efficiency of delivering information to the user.

In some embodiments, the second information may be status information of a target service. In an example scenario, the electronic device displays a second interface in response to an operation of the user that indicates to start a first application, where the second interface is an application interface of the first application.

For example, the first application includes a game application providing a game service or a taxi hailing application providing a taxi hailing service. Certainly, another application that requires the user to learn of a service status in real time may alternatively be included, for example, a delivery application.

In some embodiments, the electronic device starts the target service in response to an operation performed by the user on the second interface. After the target service is started, the second control may be displayed on the status bar when an operation of the user that indicates to exit the second interface is detected, where the second control is used to push the status information of the target service. The user may learn of a running status of the target service in a timely manner by using the second control.

In some embodiments, when the first control and the second control are overlaid and displayed on the status bar, the electronic device cancels display of the second control and the first control in response to a swipe-up operation performed by the user relative to the second control.

In the foregoing embodiment, management efficiency of overlaid interface elements displayed on the status bar may be improved.

In some other embodiments, after the second control is displayed on the status bar, the electronic device cancels display of the second control in response to a swipe-up operation performed by the user relative to the second control, to expose the first control.

In some embodiments, the target service includes a first workflow node and a second workflow node, and content of second information corresponding to the first workflow node is different from content of second information corresponding to the second workflow node. After display of the second control and the first control is canceled, the electronic device displays a first dynamic notification in response to the target service entering the second workflow node from the first workflow node, where the first dynamic notification is used to push the second information corresponding to the second workflow node, a display area of the first dynamic notification is greater than that of the second control, and content displayed actually is more than that displayed by the second control. Display of the first dynamic notification is canceled and the second control is displayed on the status bar after the first dynamic notification is displayed for preset duration, where the second control is used to push the second information corresponding to the second workflow node.

In the foregoing embodiment, the user can be prevented from missing updated second information after display of the second control is canceled, thereby ensuring a delivery rate of the second information. In another possible embodiment, the second workflow node may be a workflow node marked as "important". In this way, it is ensured that the user does not miss the status information of the target service at the important workflow node. In another possible embodiment, if the second workflow node is not an important workflow node, display of the first dynamic notification may not be triggered and the second control may not be redisplayed when the target service enters the second workflow node from the first workflow node, thereby preventing the second information from causing interference to the user.

In some embodiments, under a first condition, display of the second control is canceled in response to the second information being information whose status is updated in real time. The first condition includes the following: execution of the target service ends or continuous display duration of the second control exceeds first duration.

In some embodiments, in response to the first information being function recommendation information, display of the first control is canceled after the first control is displayed for second duration. The second duration is shorter than the first duration.

In the foregoing embodiment, the electronic device performs information type classification, to use different manners to manage interface elements (for example, the first control and the second control) for pushing different types of information. For the information whose status is updated in real time, display of a corresponding interface element may be canceled after display for a long time or after a corresponding service ends. For the function recommendation information, display of a corresponding interface element may be canceled after display for a short time. Therefore, a degree of intelligence during automatic management of the interface elements in the status bar is improved.

In some embodiments, when the first information is function recommendation information, before the first control is displayed on the status bar, the electronic device may display a target control card first, where the target control card includes a target control, and the target control is used to trigger a function indicated by the first information; and cancels display of the target control card after displaying the target control card for preset duration.

In some embodiments, the second information is a message that needs to be pushed to the user, and a second dynamic notification is displayed in response to determining that the message needs to be pushed to the user, where the second dynamic notification is used to push the second information; and display of the second dynamic notification is canceled and a corresponding second control is displayed on the status bar after preset duration.

In addition, the message that needs to be pushed to the user includes instant notification information. The electronic device cancels, in response to the second information being instant notification information, display of the second control after the second control is displayed for second duration; displays the notification center interface in response to an operation of the user, where the notification center interface does not include a notification card used to push the second information; and displays the first interface and does not display the second control on the status bar in response to the operation of the user that indicates to cancel display of the notification center interface.

In the foregoing embodiment, for the instant notification information, redisplay is not performed after display is canceled, to prevent valueless information from being repeatedly delivered to the user.

In some embodiments, a lock screen interface is displayed and display of the first control is canceled in response to an operation of the user that indicates screen locking, where the lock screen interface includes a lock screen card, and the lock screen card is used to push the first information; and the first interface is displayed and display of the first control on the status bar is restored in response to an operation of the user that indicates unlocking, or in response to an operation of the user that indicates to delete the lock screen card, display of the lock screen card is canceled before an operation of the user that indicates unlocking is detected, and the first control is not displayed on the status bar after the operation of the user that indicates unlocking is detected.

In some embodiments, when only the first control is displayed on the status bar, a third dynamic notification corresponding to the first control is displayed in response to an operation performed by the user on the first control, for example, a tap operation, where the third dynamic notification is used to push the first information, and the third dynamic notification displays more content than that displayed by the first control.

In the foregoing embodiment, more content of the first information can be checked by performing a simple tap operation, thereby facilitating the user in learning of the first information.

In some embodiments, a small application window of a second application is displayed in response to a third operation (a swipe-down operation) performed by the user on the third dynamic notification, where the first information is information about the second application.

In the foregoing embodiment, the user taps the first control and performs the swipe-down operation on the third dynamic notification, to trigger display of the small application window of the second application, thereby facilitating the user in operating the second application. It may be understood that although the small window can occlude the first interface, the first interface is not completely occluded. This does not affect another operation performed by the user on the first interface, thereby improving a multitasking capability of the device.

In some other embodiments, an application interface of a second application is displayed in response to an operation (tap operation) performed by the user on the first control, where the first information is information about the second application.

In some embodiments, in a scenario in which the first control and the second control are overlaid and displayed on the status bar, a fourth dynamic notification corresponding to the second control and a third dynamic notification corresponding to the first control are displayed in response to an operation performed by the user on the second control.

In some embodiments, display of the fourth dynamic notification and the third dynamic notification is canceled in response to a fourth operation of the user; and the overlaid second control and first control are displayed on the status bar.

The fourth operation includes any one of the following: an operation indicating switching between a landscape mode and a portrait mode; an operation indicating exit; and tapping a target region, where the target region is not overlaid with display regions of the fourth dynamic notification and the third dynamic notification.

In some embodiments, after the first control is displayed on the status bar, an eye-tracking cursor is displayed, where a display location of the eye-tracking cursor is a gaze location of the user on the display screen; a display area of the first control is increased in response to the eye-tracking cursor entering the display region of the first control; a third dynamic notification corresponding to the first control is displayed in response to the eye-tracking cursor dwelling in the display region of the first control for third duration; and an application interface of a second application is displayed in response to the eye-tracking cursor dwelling in a display region of the third dynamic notification for fourth duration, where the first information is information about the second application.

In the foregoing embodiment, the electronic device may further enrich interaction manners between the user and the interface elements in the status bar by using an eye-tracking interaction technology, thereby improving the degree of intelligence and human-computer interaction efficiency of the electronic device.

According to a second aspect, an embodiment of this application provides an electronic device. The electronic device includes a display screen, one or more processors, and a memory. A through hole for embedding a camera is disposed on the display screen. The memory is coupled to the processor. The memory is configured to store computer program code, where the computer program code includes computer instructions. When the one or more processors execute the computer instructions, the one or more processors are configured to perform the method in the first aspect and the possible embodiments thereof.

According to a third aspect, an embodiment of this application provides a computer storage medium, including computer instructions. When the computer instructions are run on an electronic device, the electronic device is enabled to perform the method in the first aspect and the possible embodiments thereof.

According to a fourth aspect, this application provides a computer program product. When the computer program product runs on the foregoing electronic device, the electronic device is enabled to perform the method in the first aspect and the possible embodiments thereof.

According to a fifth aspect, this application provides a chip system, applied to an electronic device, and storing a computer program. When the computer program is executed, the electronic device is enabled to perform the method in the first aspect and the possible embodiments thereof.

It may be understood that the electronic device, the computer storage medium, and the computer program product provided in the foregoing aspects are all applied to the corresponding method provided above. Therefore, for beneficial effects that can be achieved by the electronic device, the computer storage medium, and the computer program product, refer to the beneficial effects in the corresponding method provided above. Details are not described herein again.

### BRIEF DESCRIPTION OF DRAWINGS

FIG. 1 is an example diagram 1 of a scenario in which a status capsule is displayed on a status bar according to an embodiment of this application;
FIG. 2A and FIG. 2B are an example diagram 2 of a scenario in which a status capsule is displayed on a status bar according to an embodiment of this application;
FIG. 3A and FIG. 3B are an example diagram 3 of a scenario in which a status capsule is displayed on a status bar according to an embodiment of this application;
FIG. 4A and FIG. 4B are an example diagram 4 of a scenario in which a status capsule is displayed on a status bar according to an embodiment of this application;
FIG. 5 is an example diagram of different service information pushed by a same service by using a status capsule at different workflow nodes according to an embodiment of this application;
FIG. 6 is an example diagram of service information displayed by a same service by using a status capsule through switching at a same workflow node according to an embodiment of this application;
FIG. 7A and FIG. 7B are an example diagram of a scenario in which a same service switches between different workflow nodes according to an embodiment of this application;
FIG. 8A and FIG. 8B are an example diagram of a scenario in which a service enters a workflow node indicating end according to an embodiment of this application;
FIG. 9A and FIG. 9B are an example diagram of a scenario in which a plurality of status capsules are displayed on a status bar according to an embodiment of this application;
FIG. 10A and FIG. 10B are an example diagram of a scenario in which a dynamic notification capsule is displayed according to an embodiment of this application;
FIG. 11A, FIG. 11B, FIG. 11C, FIG. 11D, and FIG. 11E are an example diagram of a scenario in which a scenario control capsule is displayed according to an embodiment of this application;
FIG. 12A and FIG. 12B are an example diagram 1 of a scenario in which an instant notification capsule is displayed according to an embodiment of this application;
FIG. 13A and FIG. 13B are an example diagram 2 of a scenario in which an instant notification capsule is displayed according to an embodiment of this application;
FIG. 14A, FIG. 14B, and FIG. 14C are an example diagram 1 of a scenario in which a status capsule is hidden and redisplayed according to an embodiment of this application;
FIG. 15 is an example diagram 2 of a scenario in which a status capsule is hidden and redisplayed according to an embodiment of this application;
FIG. 16A and FIG. 16B are an example diagram of a scenario in which a notification corresponding to a status capsule is deleted according to an embodiment of this application;
FIG. 17A, FIG. 17B, FIG. 17C, FIG. 17D, and FIG. 17E are an example diagram of a scenario in which a notification corresponding to a status capsule is set according to an embodiment of this application;
FIG. 18A and FIG. 18B are an example diagram 3 of a scenario in which a status capsule is hidden and redisplayed according to an embodiment of this application;
FIG. 19A and FIG. 19B are an example diagram of a scenario in which a status capsule is hidden and redisplayed when there are a plurality of status capsules according to an embodiment of this application;
FIG. 20 is an example diagram 1 of interaction with a status capsule according to an embodiment of this application;
FIG. 21A and FIG. 21B are an example diagram 2 of interaction with a status capsule according to an embodiment of this application;
FIG. 22A and FIG. 22B are an example diagram 3 of interaction with a status capsule according to an embodiment of this application;
FIG. 23A and FIG. 23B are an example diagram 4 of interaction with a status capsule according to an embodiment of this application;
FIG. 24 is an example diagram 5 of interaction with a status capsule according to an embodiment of this application;
FIG. 25A, FIG. 25B, and FIG. 25C are an example diagram 6 of interaction with a status capsule according to an embodiment of this application;
FIG. 26A and FIG. 26B are an example diagram 7 of interaction with a status capsule according to an embodiment of this application;
FIG. 27A and FIG. 27B are an example diagram 8 of interaction with a status capsule according to an embodiment of this application; and
FIG. 28 is an example diagram of a structure of an electronic device according to an embodiment of this application.

### DESCRIPTION OF EMBODIMENTS

In the following, the terms "first" and "second" are used merely for the purpose of description, and shall not be construed as indicating or implying relative importance or implicitly indicating a quantity of indicated technical features. Therefore, a feature limited by "first" or "second" may explicitly or implicitly include one or more features. In descriptions of the embodiments, unless otherwise stated, "a plurality of" means two or more.

As full-view screens are widely used in electronic devices, a camera hole configured to configure a front-facing camera is usually disposed at a top of a screen of an electronic device. When the screen is turned on to display content, there is no display pixel at the front-facing camera hole and the content cannot be displayed. That is, the front-facing camera hole is black, which is inconsistent with a display region of the screen.

To reduce an abrupt sense of the front-facing camera hole, an embodiment of this application provides a status bar notification display solution in combination with a front-facing camera hole. For example, service information related to various services is displayed in a capsule style at the front-facing camera hole. A color of the capsule is black, and the front-facing camera hole is also black. In this way, the capsule and the front-facing camera hole are presented as a complete capsule form. In this way, a user can quickly learn of an important notification of a service by using the capsule at a status bar, thereby improving efficiency of the user in obtaining the important notification, and reducing an abrupt sense of the front-facing camera hole.

In some embodiments, the black capsule, referred to as a status capsule, is always displayed on the status bar of the electronic device. The front-facing camera hole of the electronic device is embedded into the status capsule, so that the front-facing camera hole and the status capsule are integrated visually. For example, when service information does not need to be pushed to the user, a display area of the status capsule is small and there is no display content. When the service information needs to be pushed to the user, the display area of the status capsule increases, and the service information that needs to be pushed, for example, a corresponding icon and key content, may be displayed on the status capsule.

In some other embodiments, when the service information does not need to be pushed to the user, the status capsule is not displayed and a lens of a front-facing camera is exposed. When the service information needs to be pushed to the user, the status capsule is displayed, and the service information that needs to be pushed, for example, a corresponding icon and key content, may be displayed on the status capsule. The displayed status capsule is black, and the front-facing camera hole is embedded into the status capsule, so that the front-facing camera hole and the status capsule are integrated visually, thereby making full use of display space provided by the screen.

In some embodiments, the electronic device may push the service information by using the status capsule at the status bar. In a scenario in which the service information is pushed by using the status capsule, push duration of the service information is controlled by service logic of the service. In this case, some service information dwells in the status bar for a long time, which causes interference to the user.

For example, according to service logic corresponding to a long-distance taxi hailing service, after the long-distance taxi hailing service starts, a status capsule used to push a notification related to the long-distance taxi hailing service is displayed on the status bar. After the long-distance taxi hailing service ends, pushing of the notification related to the taxi hailing service is canceled. For example, a manner of canceling pushing of the notification related to the taxi hailing service may be that the status capsule shrinks, no content is displayed, and the front-facing camera hole is hidden under the shrunk status capsule. For another example, a manner of canceling pushing of the notification related to the taxi hailing service may alternatively be canceling display of the status capsule on the status bar and exposing the front-facing camera hole.

Because a service period of the long-distance taxi hailing service is long, the status capsule used to push the notification related to the long-distance taxi hailing service dwells in the status bar for a long time. Obviously, long-term dwelling causes interference to the user and occupies limited display space of the status bar for a long time, thus affecting utilization of the status bar.

To alleviate the foregoing problem, an embodiment of this application provides an information display method. After applying the information display method, the electronic device may, in response to an operation of the user, cancel (or restore) display of a status capsule used to push service information. Therefore, the service information is prevented from dwelling in the status bar for a long time while interactivity of the status capsule is improved.

A capsule (or status capsule) that is displayed on a status bar and that is mentioned in a subsequent embodiment is a black capsule, and a display location of the capsule is related to a location of a front-facing camera hole, so that the front-facing camera hole is embedded into the capsule (or status capsule), to hide the front-facing camera hole. Certainly, another type of capsule may be further displayed on the status bar, for example, another capsule whose color and display location are unrelated to those of the front-facing camera hole. Details are not described in the embodiments of this application.

The information display method provided in this embodiment of this application is described in detail below with reference to the accompanying drawings.

In some embodiments, when an application of a first type runs in a background of the electronic device, and the application of the first type is providing a corresponding application service to the user, the electronic device can display service information corresponding to the application of the first type on the status bar. In this way, the user learns of a running status of the application of the first type in the background based on the service information. The application of the first type may be an application that requires the user to learn of a real-time running status when providing a corresponding application service.

For example, the application of the first type includes a music application. When the music application is playing music (providing a music playing service to the user), the user needs to learn of information such as whether the music application is playing normally and a track is being played. Correspondingly, in a scenario in which music is continuously played (the music playing service is providing to the user) after the music application runs in the background, the electronic device may display service information corresponding to the music application on the status bar.

For another example, the application of the first type alternatively includes a game application. When the game application starts a game session (is providing a game service to the user) in response to an operation of the user, the user needs to learn of information such as a progress in the game session. Correspondingly, in a scenario in which the game application is temporarily moved to the background for running and the game session does not end, the electronic device may display service information corresponding to the game application on the status bar, and the user may learn of the progress in the game session based on the service information. It may be understood that the foregoing merely provides examples of the application of the first type, and is not intended to limit the application of the first type. In some possible embodiments, an application actually included in the application of the first type may be customized.

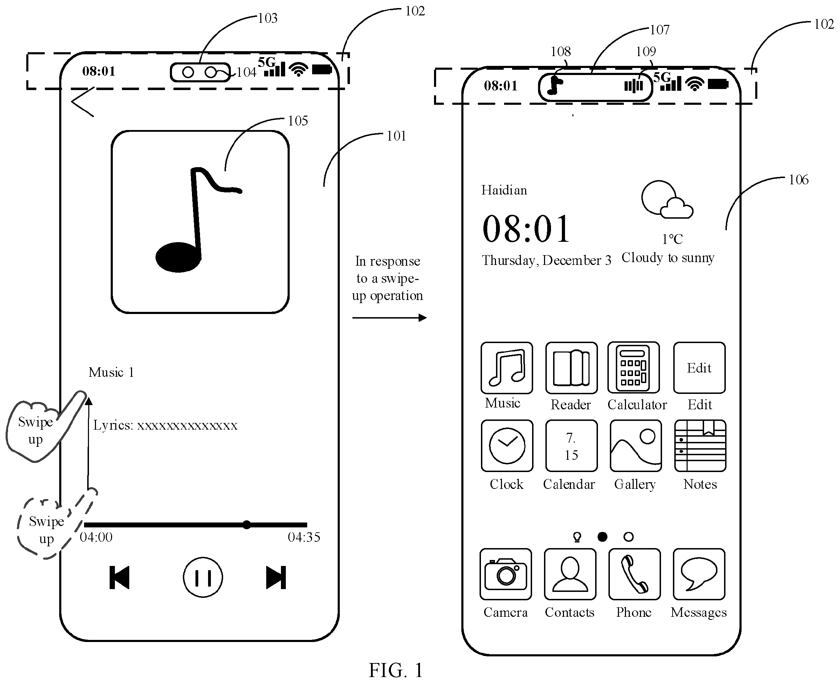

The music application is still used as an example of the application of the first type. As shown in FIG. 1, the music application in the electronic device runs in a foreground, and the electronic device displays a music playing interface 101 provided by the music application. The music playing interface 101 may display information about a track (music 1) that is being played, for example, an album art 105 of the music 1, a track title, lyrics, a playing status (playing or paused), and a playing progress. The user may learn of a running status of the music application based on the music playing interface 101. In addition, during display of the music playing interface 101, a capsule 103 is displayed on a status bar 102 of the electronic device, no content is displayed in the capsule 103, and a front-facing camera hole 104 of the electronic device is embedded into the capsule 103, so that the front-facing camera hole 104 is hidden under the capsule 103. In another embodiment, during display of the music playing interface 101, the capsule 103 may alternatively be not displayed on the status bar 102 of the electronic device, but the front-facing camera hole 104 is exposed. This is not specifically limited in the embodiments of this application.

When the music playing interface 101 is displayed, the electronic device may move, in response to an operation of the user, the music application to the background for running. As shown in FIG. 1, the electronic device may display a main interface 106 in response to a swipe-up operation of the user. The main interface 106 includes an application icon of an application already configured in the electronic device. Real-time running status information of the music application is not displayed in the main interface 106. In a process in which the electronic device switches the music playing interface 101 to the main interface 106, display of the capsule 103 on the status bar 102 changes into display of a status capsule 107, where the status capsule 107 occupies a larger display area than that occupied by the capsule 103, and the service information corresponding to the music application is displayed in the status capsule 107. The service information includes an icon 108 (if the music 1 is being played, the icon 108 may be a thumbnail of the album art of the music 1) from the music application and a service status 109 indicating normal playing.

In this way, visually, as the music application is moved to the background for running, the capsule 103 on the status bar is gradually enlarged to become the status capsule 107. After another interface (for example, the main interface 106) is displayed through switching, the service information corresponding to the music application is displayed in the status capsule 107 on the status bar. In this way, even if the music application is moved to the background for running, the user may still learn of the real-time running status of the music application by using the status capsule 107.

In some embodiments, in a scenario in which the electronic device pushes important information to the user, a status capsule used to push the important information may be displayed on the status bar. In this way, the user is prevented from missing the important information, and excessive interference of this important information to the user is reduced.

For another example, the important information may include information that is assessed by the electronic device as needed to be pushed to the user and whose importance meets a pre-defined condition.

A criterion for measuring the importance is whether ignoring the information will cause significant impacts, such as losses of life, property, time, and opportunities. In an example, the importance of the information may include "very important", "important", "general", and "unimportant". "Very important" means that life of the user may be threatened if the user performs no processing on, for example, notifications regarding major natural disasters such as earthquake or typhoon. "Important" means that a property loss may be caused if the user performs no processing on, for example, notifications such as a taxi hailing notification or a package pickup notification. "General" means that time of the user may be wasted if the user misses, for example, a notification indicating package-in-transit. "Unimportant" means that the user is not affected if the user misses, for example, a system reminder about healthy phone usage time. For example, the pre-defined condition may be that the importance is "very important", "important", and "general".

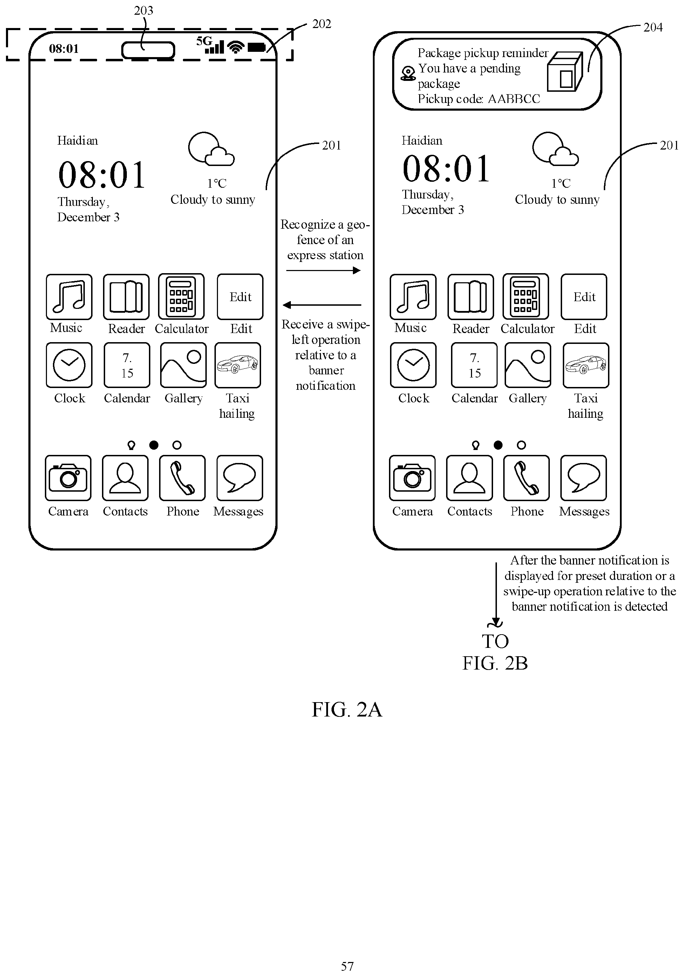

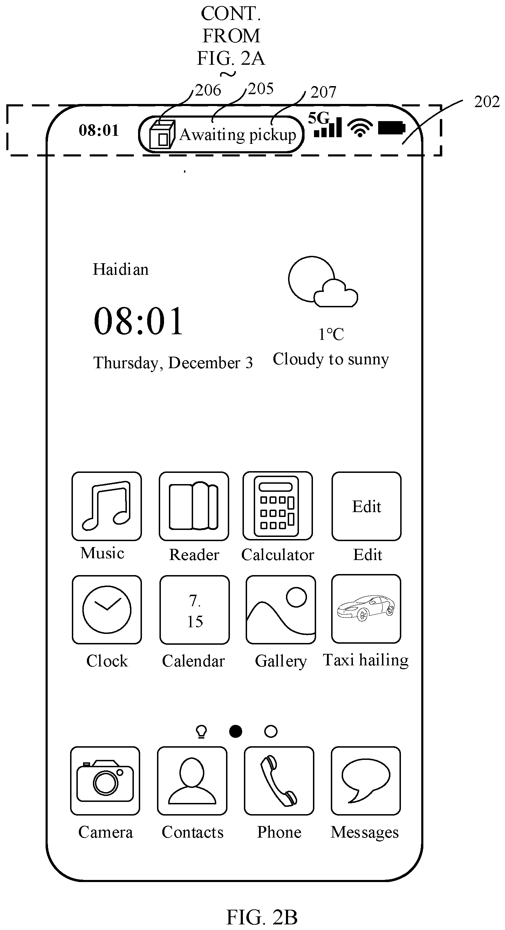

A scenario in which the electronic device assesses the important information that needs to be pushed is used as an example. As shown in FIG. 2A and FIG. 2B, the electronic device enters a particular geo-fence (for example, a geo-fence corresponding to an express station) with the user, and triggers related package pickup information pushed to the user. Before entering the particular geo-fence, the electronic device displays a main interface 201. During display of the main interface 201, a capsule 203 is displayed on a status bar 202 of the electronic device, and the capsule 203 is a same capsule as the capsule 103 in FIG. 1. After entering the geo-fence corresponding to the express station, the electronic device displays a dynamic banner 204 and cancels display of the capsule 203 in response to recognizing the geo-fence of the express station. The dynamic notification 204 is used to display the package pickup information related to the express station, for example, a pickup address, a pickup status, a pickup code, and a shipping mark.

For example, the dynamic notification may be displayed in a form of a black card. A display location of the dynamic notification is also related to that of the front-facing camera hole. When the dynamic notification is displayed, the front-facing camera hole is embedded into the dynamic notification, so that the front-facing camera hole and the dynamic notification are integrated visually.

As shown in FIG. 2A and FIG. 2B, display duration of the dynamic notification 204 reaches preset duration (for example, 5S), and an operation for the dynamic notification 204 is not detected, or a swipe-up operation (a start point of the swipe-up operation is located in a touch hot zone of the dynamic notification 204, and an operation performed by the user in the touch hot zone may be considered as an operation for the dynamic notification 204) relative to the dynamic notification 204 is detected, display of the dynamic notification 204 is canceled, and a status capsule 205 is displayed on the status bar 202. The foregoing process is visually presented as follows: The dynamic notification 204 shrinks to the status capsule 205.

A display area of the status capsule 205 is less than that of the dynamic notification 204, and key content in the package pickup information is displayed in the status capsule 205, for example, a shipping mark 206 and a pickup status 207 are displayed. The key content may be information selected from the package pickup information, and the key content may reflect that the currently displayed capsule is related to package pickup. When there are a plurality of pieces of key content, different key content may be displayed on the capsule through carousel/switch.

In addition, as shown in FIG. 2A and FIG. 2B, display of the dynamic notification 204 is canceled and the capsule 203 is displayed on the status bar 202 again in response to an operation of the user that indicates to cancel the dynamic notification, for example, a swipe-left operation relative to the dynamic notification 204 (a start point of the swipe-left operation is located in the touch hot zone of the dynamic notification 204). The foregoing process is visually presented as follows: The dynamic notification 204 shrinks to the capsule 203, and stops pushing the package pickup information to the user.

In some embodiments, the electronic device pushes service information from an application by using a banner notification. The banner notification may be a card of any color, and may be displayed at the top, middle, or bottom of the screen. Corresponding push information needs to be checked in a notification center after display of the banner notification is canceled. Compared with the dynamic notification, human-computer interaction efficiency of checking a real-time status of the push information after display of the banner notification is canceled is lower.

In some embodiments, a push manner of some service information may be modified from the banner notification to the dynamic notification in advance. For example, a push manner of service information such as call service information, taxi hailing service information, navigation information, and delivery order information may be modified from the banner notification to the dynamic notification.

For example, a manner of modifying the push manner from the banner notification to the dynamic notification may be that a type identifier of the service information is added to a preset white list in response to an indication of the user or a developer. In this way, when detecting that service information that needs to be pushed matches an identifier in the white list, the electronic device pushes the service information by using the dynamic notification.

If the service information originally needs to be pushed by using a permanently displayed banner notification, for example, the call service information and alarm clock reminder information, after the push manner is modified to the dynamic notification, the service information also needs to be pushed by using a permanently displayed dynamic notification. That is, after a dynamic notification of the call service information (or the alarm clock reminder information) is displayed, when an operation of the user for the permanently displayed dynamic notification is not detected, display duration of the permanently displayed dynamic notification is not limited. For another dynamic notification, display of the dynamic notification is canceled after the dynamic notification is displayed for preset duration.

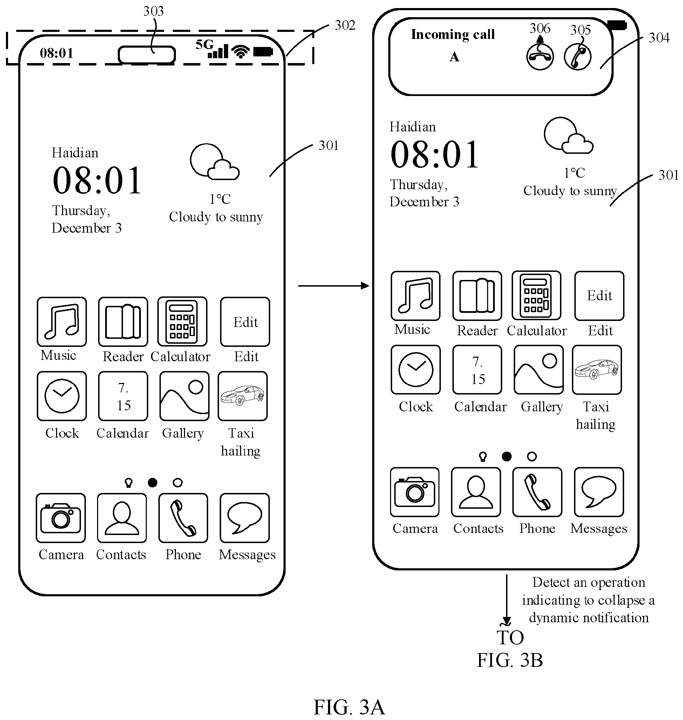

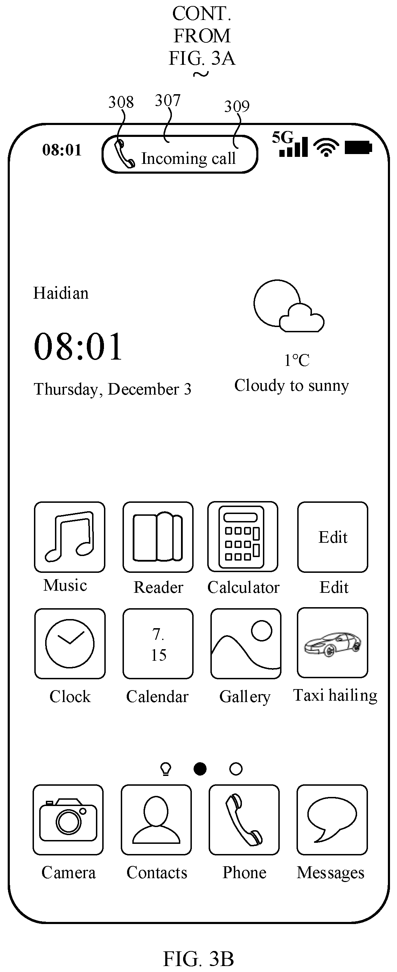

A scenario in which the call service information is pushed by using a permanently displayed dynamic notification is used as an example. As shown in FIG. 3A and FIG. 3B, before receiving an incoming call request, the electronic device displays a main interface 301. During display of the main interface 301, a capsule 303 is displayed on a status bar 302 of the electronic device, and the capsule 303 is a same capsule as the capsule 103 in FIG. 1.

After receiving the incoming call request, the electronic device launches a call service, cancels display of the capsule 303, and displays a dynamic notification 304. The dynamic notification 304 is used to display related information of the call service, for example, an icon of the call service, a call type (incoming call or outgoing call), a calling status (awaiting answer, connected, and terminated), call duration, contact information corresponding to the call, and communication controls (a function control 305 indicating answering and a function control 306 indicating hanging up). In addition, a display location of the dynamic notification 304 is related to that of the front-facing camera hole, so that the front-facing camera hole is embedded into the dynamic notification 304. The dynamic notification 304 is black, so that the front-facing camera hole can be hidden.

If an operation of the user for the dynamic notification 304 is not detected, display of the dynamic notification 304 may be remained until the call service ends.

As shown in FIG. 3A and FIG. 3B, the electronic device may detect an operation of the user that indicates to collapse the dynamic notification 304, for example, a swipe-up operation relative to the dynamic notification 304, where a start point of the swipe-up operation is located in a touch hot zone of the dynamic notification 304.

For example, display of the dynamic notification 304 is canceled and a status capsule 307 is displayed on the status bar 302 in response to the operation indicating to collapse the dynamic notification 304. Visually, the dynamic notification 304 shrinks to the status capsule 307. A display area of the status capsule 307 is less than that of the dynamic notification 304, and less information related to the call service can be displayed, for example, the status capsule 307 may display key content corresponding to the call service, for example, an icon 308 of the call service and an identifier 309 representing a call type. The key content of the call service may be information selected from the related information of the call service, and the key content may reflect that the currently displayed capsule is related to the call service.

In addition, the key content corresponding to the call service may include a plurality of pieces of information. In different scenarios, the capsule displays different key content. For example, when the incoming call is not answered, the identifier 309 may be a character "Incoming call", which indicates that the call type of the call service is an incoming call that waits to be answered. When the incoming call is answered, the identifier 309 may display call holding duration.

After the call service ends, for example, after it is detected that the user indicates to hang up the incoming call, or display duration of the dynamic notification 304 reaches preset incoming call waiting duration and an answering indication of the user is not detected, display of the status capsule 307 is canceled and the capsule 303 is displayed on the status bar 302 again.

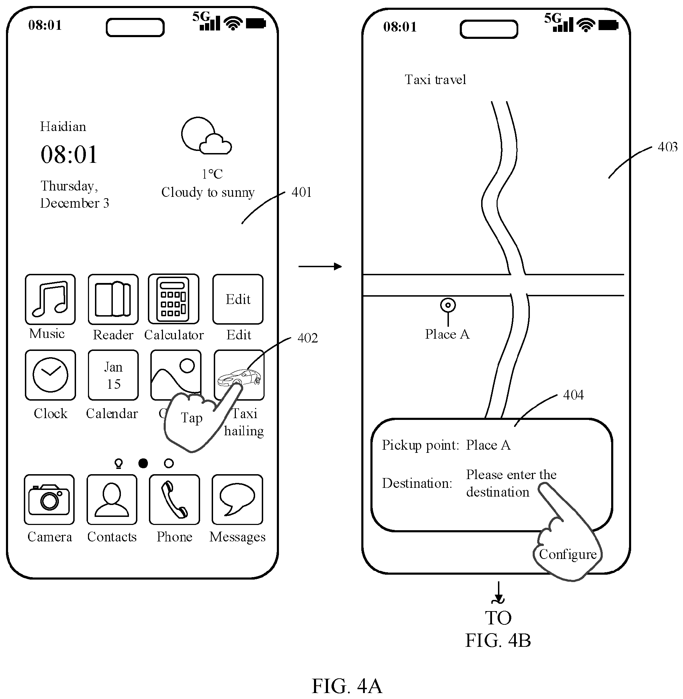

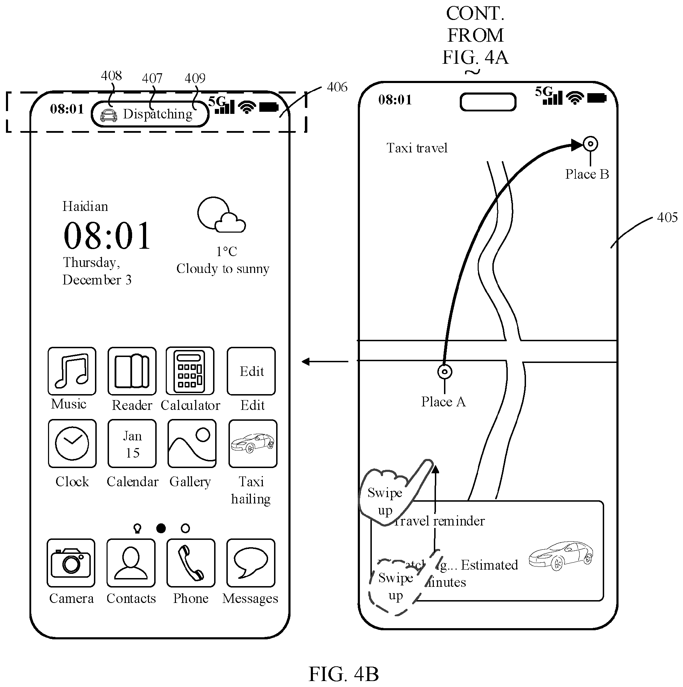

A scenario in which the taxi hailing service information is pushed by using a dynamic notification is used as an example. As shown in FIG. 4A and FIG. 4B, the electronic device displays a main interface 401. The main interface 401 includes an application icon of an installed application, for example, an icon 402 of a taxi hailing application. A taxi travel interface 403 is displayed in response to the user tapping the icon 402. The taxi travel interface 403 includes a trip configuration box 404. In response to a configuration operation of the user in the trip configuration box 404, for example, an operation of configuring a trip from a place A to a place B, a taxi hailing service is provided to the user according to a service workflow corresponding to the taxi hailing service.

In a process in which the electronic device performs the service workflow corresponding to the taxi hailing service, the electronic device may go through a plurality of workflow nodes, such as a "platform dispatching" node, a "driver heading to pickup" node, an "arrived at pickup point" node, an "en route to destination" node, and a "trip ended" node.

Different taxi hailing service information needs to be pushed to the user at different workflow nodes. For example, dispatch waiting-related information (a dispatch status and dispatch waiting duration) needs to be pushed to the user at the "platform dispatching" node. For another example, vehicle-related information (for example, driver information, license plate information, and vehicle location information) and estimated duration for a vehicle to arrive at a pickup point need to be pushed to the user at the "driver heading to pickup" node. For another example, information such as vehicle waiting duration needs to be pushed to the user at the "arrived at pickup point" node. For another example, trip-related information (navigation route information, estimated time for arrival, and a road congestion situation) and the like need to be pushed to the user at the "en route to destination" node. For another example, service result information (trip duration and trip evaluation) and the like need to be pushed to the user at the "trip ended" node.

The electronic device may display the taxi hailing service interface 405 when the taxi hailing application runs in the foreground. A workflow node at which the taxi hailing service is currently located and corresponding taxi hailing service information are presented to the user by using the taxi hailing service interface 405.

When the taxi hailing application runs in the background, the electronic device pushes, in response to the taxi hailing service switches from one workflow node to another workflow node, taxi hailing service information related to the switched workflow node by using a dynamic notification, and pushes taxi hailing service information related to a current workflow node by using a status capsule on a status bar when the dynamic notification is not displayed.

As shown in FIG. 4A and FIG. 4B, when displaying the taxi hailing service interface 405, the electronic device displays the main interface 401 in response to an operation of the user that indicates to exit the taxi hailing application, for example, a swipe-up operation. Correspondingly, a status capsule 407 is displayed on a status bar 406. For example, one or more pieces of taxi hailing service information corresponding to the "platform dispatching" node are displayed in the status capsule 407, for example, an icon 408 indicating the taxi hailing service and content 409 indicating that dispatching is being performed.

A display area of the status capsule 407 is limited. When a plurality of pieces of taxi hailing service information corresponding to the current workflow node need to be displayed, the plurality of pieces of taxi hailing service information corresponding to the current workflow node may be displayed in the status capsule 407 in a carousel manner.

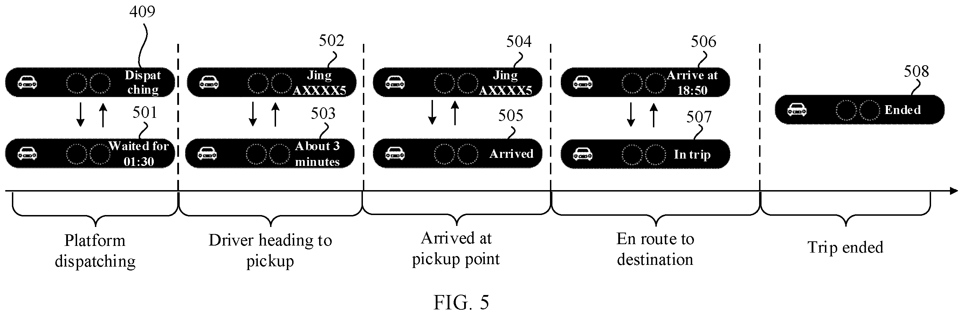

For example, as shown in FIG. 5, when the taxi hailing service is at the "platform dispatching" node, the electronic device may display the dispatch status and the dispatch waiting duration by using a status capsule through carousel/switch.

In an implementation, the electronic device may display content 409 indicating the dispatch status and content 501 indicating the dispatch waiting duration in the status capsule on the status bar through carousel/switch at a preset interval (for example, 2 seconds), where the content 501 may be determined based on actual dispatch waiting duration, for example, the content 501 is "Waited for 01:30" when the dispatch waiting duration is 1 minute and 30 seconds.

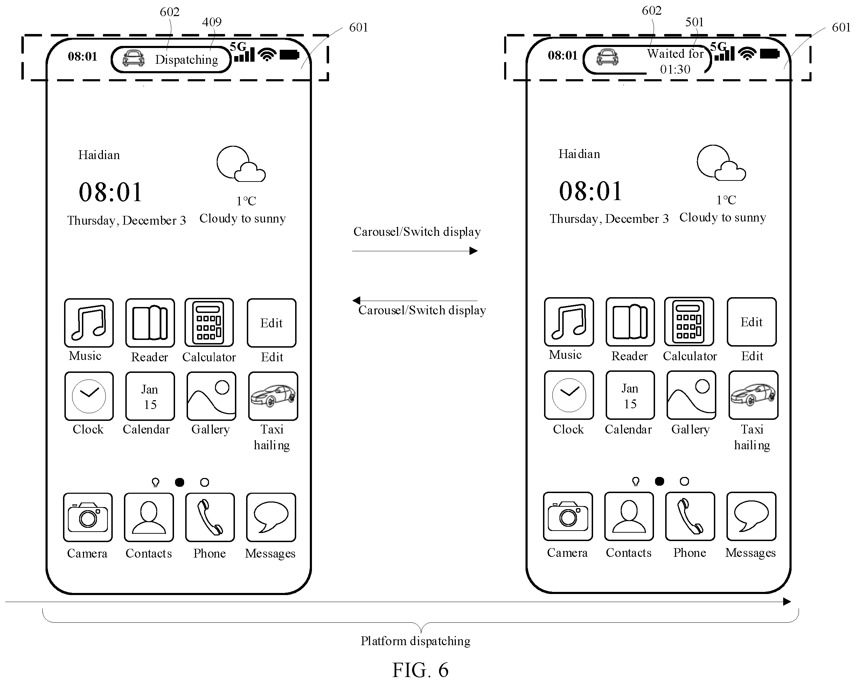

For example, as shown in FIG. 6, when the taxi hailing service is at the "platform dispatching" node, the content 409 (that is, a character "Dispatching") is displayed in a status capsule 602 on a status bar 601 in response to the taxi hailing application being moved to the background for running, and is switched to the content 501 (that is, the actual dispatch waiting duration) for display after 2 seconds. Thereafter, the content 409 and the content 501 are repeatedly displayed through carousel/switch.

For example, as shown in FIG. 5, when the taxi hailing service is at the "driver heading to pickup" node, the electronic device may display the vehicle-related information and the estimated duration for arriving at the pickup point by using a status capsule.

In an implementation, the electronic device may display content 502 indicating the vehicle-related information and content 503 indicating the estimated duration in the status capsule on the status bar through carousel/switch at a preset interval (for example, 2 seconds), where the content 502 may be a license plate number of a vehicle that has accepted an order, for example, Jing AXXXX5. The content 503 may be estimated duration for the vehicle that has accepted the order to arrive at the pickup point, for example, about 3 minutes.

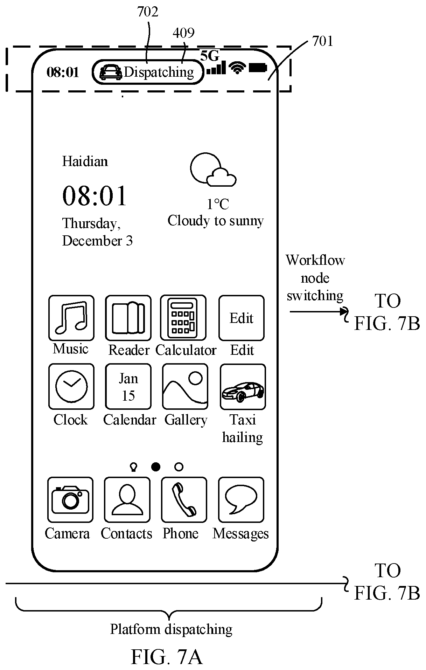

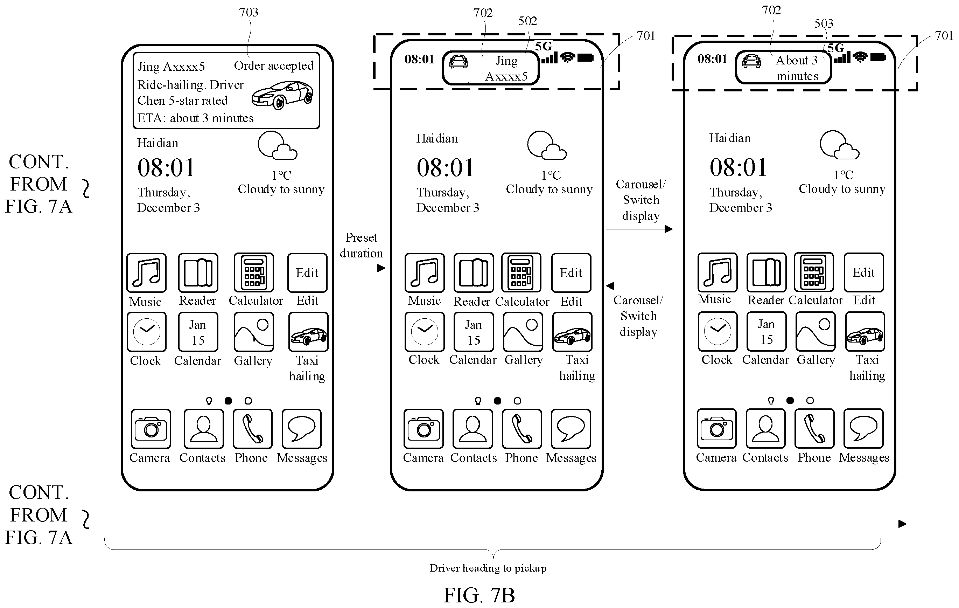

For example, as shown in FIG. 7A and FIG. 7B, before it is detected that the taxi hailing service enters the "driver heading to pickup" node from the "platform dispatching" node, the content 409 (that is, the character "Dispatching") is displayed in a status capsule 702 on a status bar 701. After it is detected that the taxi hailing service enters the "driver heading to pickup" node from the "platform dispatching" node, a dynamic notification 703 is displayed and display of the dynamic capsule 702 is canceled. Taxi hailing service information corresponding to the "driver heading to pickup" node, for example, the vehicle-related information and the estimated time for arriving at the pickup point, may be displayed by using the dynamic notification 703.

In response to the dynamic notification 703 being displayed for preset duration and an operation for the dynamic notification 703 being not detected, or in response to a swipe-up operation (a start point of the swipe-up operation is located in a touch hot zone of the dynamic notification 703) performed by the user relative to the dynamic notification 703, the electronic device cancels display of the dynamic notification 703 and displays the status capsule 702 on the status bar 701 again, where the content 502 indicating the vehicle-related information and the content 503 indicating the estimated duration may be displayed in the status capsule 702 through carousel/switch.

For example, as shown in FIG. 5, when the taxi hailing service is at the "arrived at pickup point" node, the electronic device may display the vehicle-related information and an arrival status by using a status capsule through carousel/switch.

In an implementation, the electronic device may display content 504 indicating the vehicle-related information and content 505 indicating the arrival status in the status capsule on the status bar through carousel/switch at a preset interval (for example, 2 seconds), where the content 504 may be a license plate number of a vehicle that has accepted an order, for example, Jing AXXXX5. The content 505 may be a character "Arrived".

For example, as shown in FIG. 5, when the taxi hailing service is at the "en route to destination" node, the electronic device may display the estimated time for arrival and an arrival status by using a status capsule through carousel/switch.

In an implementation, the electronic device may display content 506 and content 507 in the status capsule on the status bar through carousel/switch at a preset interval (for example, 2 seconds), where the content 506 may be estimated time for arriving at a destination, for example, the content 506 may be "Arrive at 18:50" if it is estimated that the destination can be reached at 18:50. Certainly, because there are many uncontrollable factors during an actual trip, when the estimated time for arriving at the destination changes, the content 506 also changes. The content 507 may be a character "In trip".

For example, as shown in FIG. 5, when the taxi hailing service is at the "trip ended" node, the electronic device may display the service result information by using a status capsule. For example, a character "Ended" may be displayed.

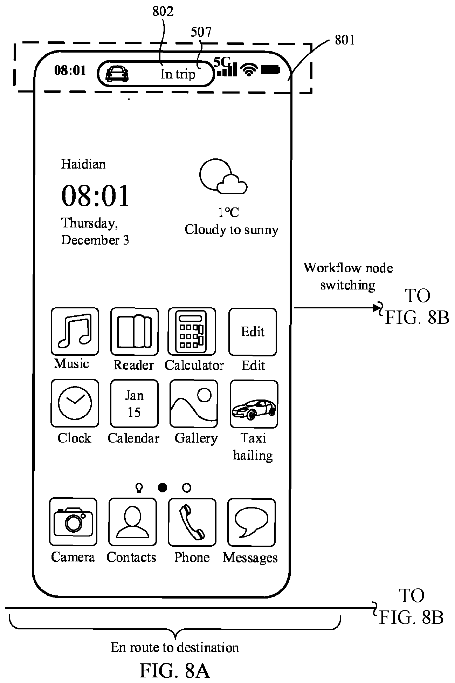

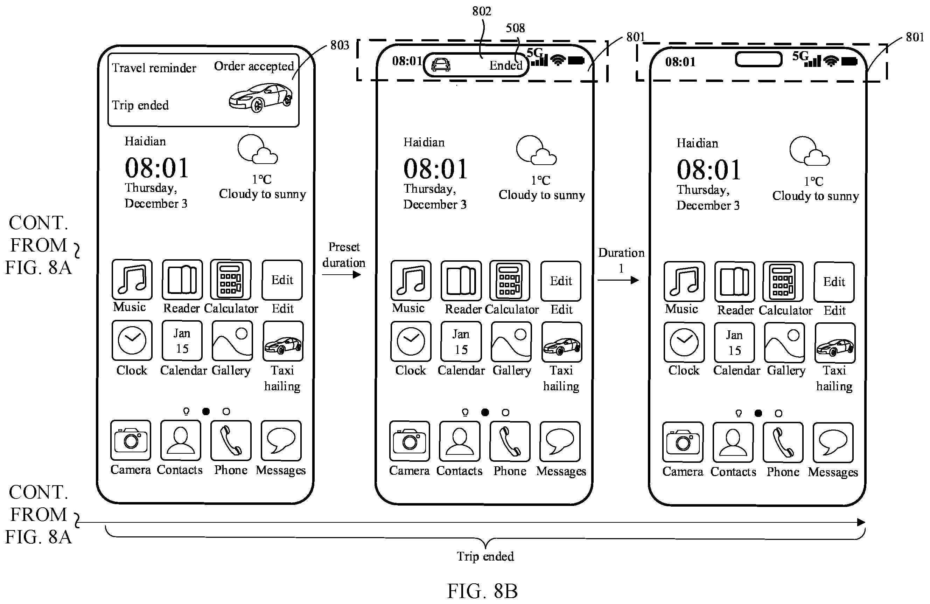

After the taxi hailing service enters the "trip ended" node, display of the status capsule used to push the taxi hailing service information may be canceled. As shown in FIG. 8A and FIG. 8B, before it is detected that the taxi hailing service enters the "trip ended" node from the "en route to destination" node, the content 507 (that is, the character "In trip") is displayed in a status capsule 802 on the status bar 801. After it is detected that the taxi hailing service enters the "trip ended" node from the "en route to destination" node, a dynamic notification 803 is displayed and display of the dynamic capsule 802 is canceled. Taxi hailing service information corresponding to the "trip ended" node, for example, a trip evaluation entrance, time spent on the trip, and the character "Ended" indicating that the trip ends, may be displayed by using the dynamic notification 803.

In response to the dynamic notification 803 being displayed for preset duration and an operation for the dynamic notification 803 being not detected, or in response to a swipe-up operation (a start point of the swipe-up operation is located in a touch hot zone of the dynamic notification 803) performed by the user relative to the dynamic notification 803, the electronic device cancels display of the dynamic notification 803 and displays the status capsule 802 on the status bar 801 again, where content 508 may be displayed in the status capsule 802. After display duration of the status capsule 802 including the content 508 is greater than duration 1, display of the status capsule 802 is canceled.

In some embodiments, when an application runs in the background, a dynamic notification may be triggered when an application service being performed by the application enters any workflow node, for example, shown as the scenarios in FIG. 7A and FIG. 7B and FIG. 8A and FIG. 8B.

In some other embodiments, workflow nodes corresponding to an application service are classified into a key node and an ordinary node, and the key node and the ordinary node may be customized. For example, the "driver heading to pickup" node, the "arrived at pickup point" node, and the "en route to destination" node corresponding to the taxi hailing service are configured as key nodes in response to an operation of the user, and correspondingly, other workflow nodes of the taxi hailing service are ordinary workflow nodes.

When the application runs in the background, and when the application service being performed by the application enters the key node, the dynamic notification may be triggered, for example, as shown in FIG. 7A and FIG. 7B, the dynamic notification 703 may be displayed when the application service enters the "driver heading to pickup" node. When the application service being performed by the application enters the ordinary node (for example, the "trip ended" node), the step of displaying the dynamic notification is skipped, and only the content displayed in the status capsule is updated.

In some embodiments, a plurality of status capsules may be further displayed on the status bar of the electronic device.

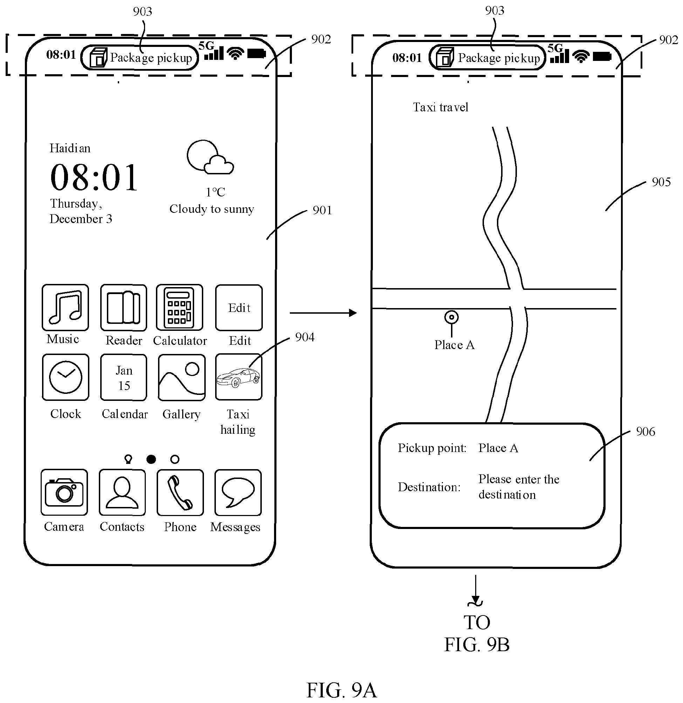

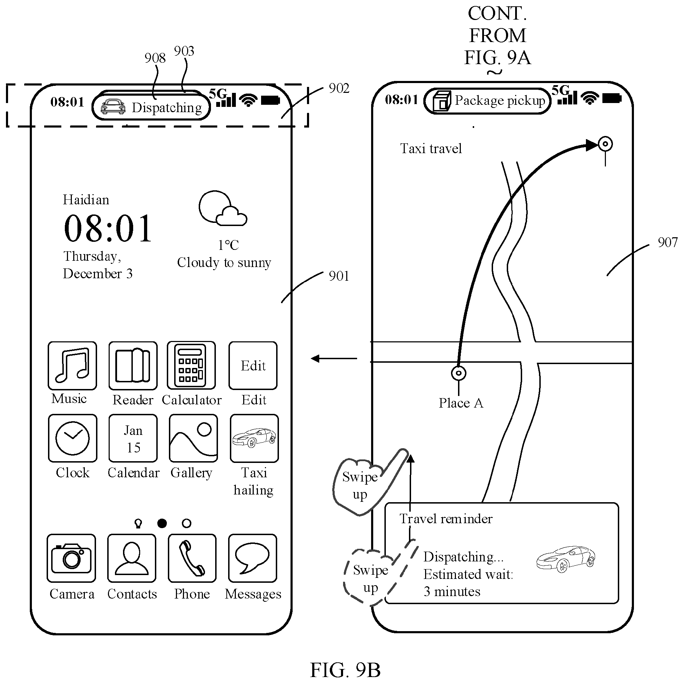

In an example scenario, as shown in FIG. 9A and FIG. 9B, when the electronic device displays a main interface 901, a status capsule 903 related to package pickup has been displayed on a status bar 902. The taxi hailing application is started and a taxi travel interface 905 provided by the taxi hailing application is displayed in response to the user tapping an icon 904 in the main interface 901. In this case, the status capsule 903 is still displayed on the status bar 902.

As shown in FIG. 9A and FIG. 9B, the taxi travel interface 905 includes a trip configuration box 906. In response to a configuration operation of the user in the trip configuration box 906, for example, an operation of configuring a trip from a place A to a place B, the electronic device may display a taxi hailing service interface 907 and start the taxi hailing service.

Then, the main interface 901 is displayed again in response to an operation of the user that indicates to exit the taxi hailing application, for example, in response to a swipe-up operation performed by the user on the taxi hailing service interface 907. Correspondingly, the electronic device displays a status capsule 908 on the status bar 902. The status capsule 908 is used to display the taxi hailing service information. The status capsule 908 is overlaid on the status capsule 903.

In this embodiment of this application, the status capsules displayed on the status bar may be classified into a plurality of types based on pushed object types. Display duration of different types of status capsules on the status bar is different.

For example, the status capsules may be classified into a dynamic service capsule, a scenario control capsule, and a status feedback capsule.

An object pushed by the dynamic service capsule may be service information that is subject to content updating and that requires the user to learn of in a timely manner, for example, the call service information, the taxi hailing service information, the navigation information, and the delivery order information. The object pushed by the dynamic service capsule may alternatively have a clear beginning (with an explicit user expectation) and have an end status, for example, may be exercise plan information. The object pushed by the dynamic service capsule may alternatively be a small amount of information that is very important (or important or general), for example, may be static information or dynamic information.

An object pushed by the scenario control capsule is a control function accessed, based on a real-time scenario, as needed to be pushed to the user, for example, a facial beautification control function or a sound effect adjustment function.

An object pushed by the status feedback capsule is a status reminder that needs to be delivered to the user instantaneously and does not need to be pushed to the user for a long time, and is usually transient reminder information, for example, a keyboard and mouse sharing reminder or a headset connection reminder.

In some embodiments, display duration of the dynamic service capsule is controlled according to a service rule of a pushed service.

For example, a service rule corresponding to a package pickup service indicates that the status capsule of the package pickup information is no longer displayed after a package is picked up or leaves the geo-fence of the express station.

For example, a service rule of the taxi hailing service indicates that the status capsule for pushing the taxi hailing service information is no longer displayed after the taxi hailing service ends. Correspondingly, as shown in FIG. 8A and FIG. 8B, display of the status capsule 802 used to push the taxi hailing service information is canceled at an interval of duration 1 after the taxi hailing service enters an end workflow node.

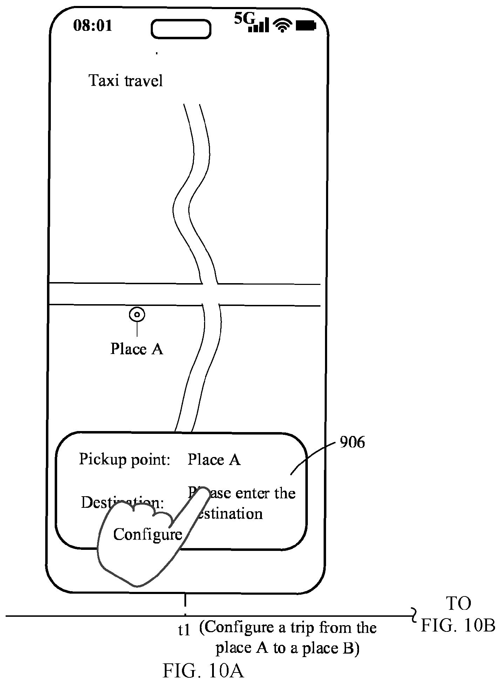

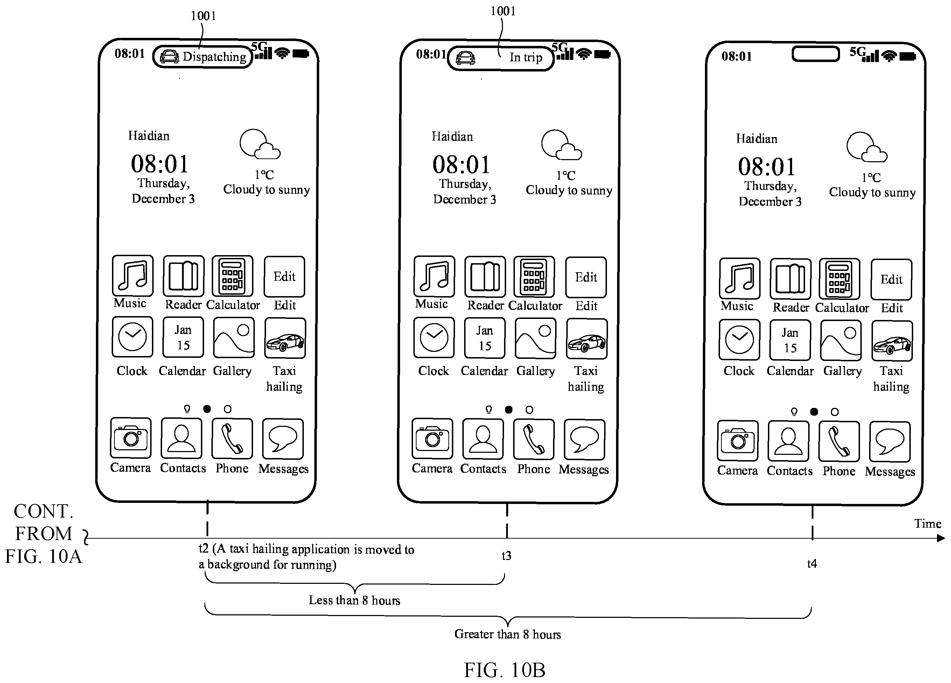

For example, the service rule of the taxi hailing service indicates that continuous display duration of the status capsule does not exceed 8 hours. Correspondingly, as shown in FIG. 10A and FIG. 10B, at a moment t1, the electronic device starts the taxi hailing service in response to an operation of the user, for example, an operation of configuring a trip from a place A to a place B. At a moment t2, the electronic device moves the taxi hailing application to the background for running and displays a status capsule 1001 in response to an operation of the user, where the status capsule 1001 is used to push the taxi hailing service information.

As shown in FIG. 10A and FIG. 10B, a time interval between a time point t2 and a time point t3 is less than 8 hours, taxi hailing service information displayed by the status capsule 1001 may change but is always displayed within a time period between the time point t2 and the time point t3. A time interval between the time point t2 and a time point t4 is greater than 8 hours, and the electronic device does not display the status capsule 1001.

In some embodiments, display duration of the scenario control capsule is preconfigured duration 2, for example, the duration 2 is 10 seconds.

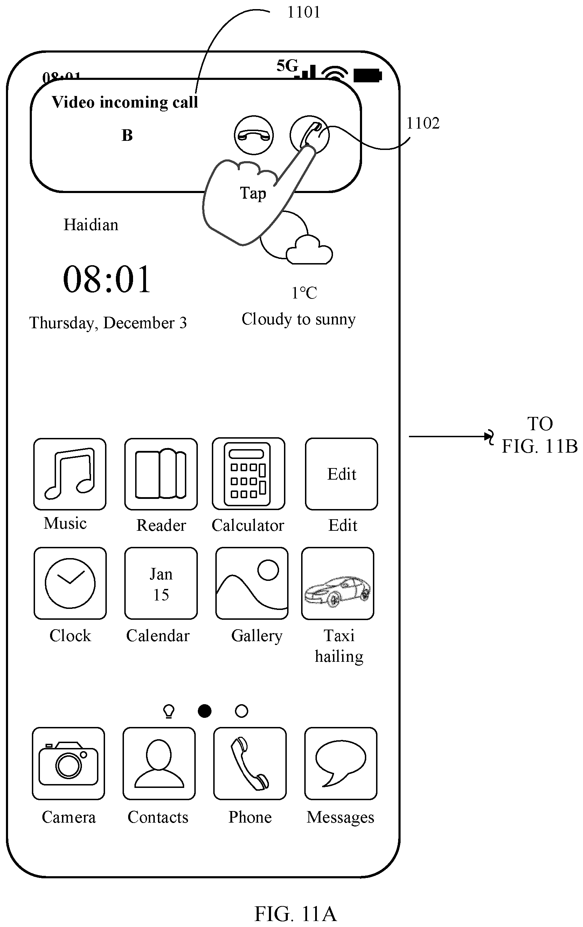

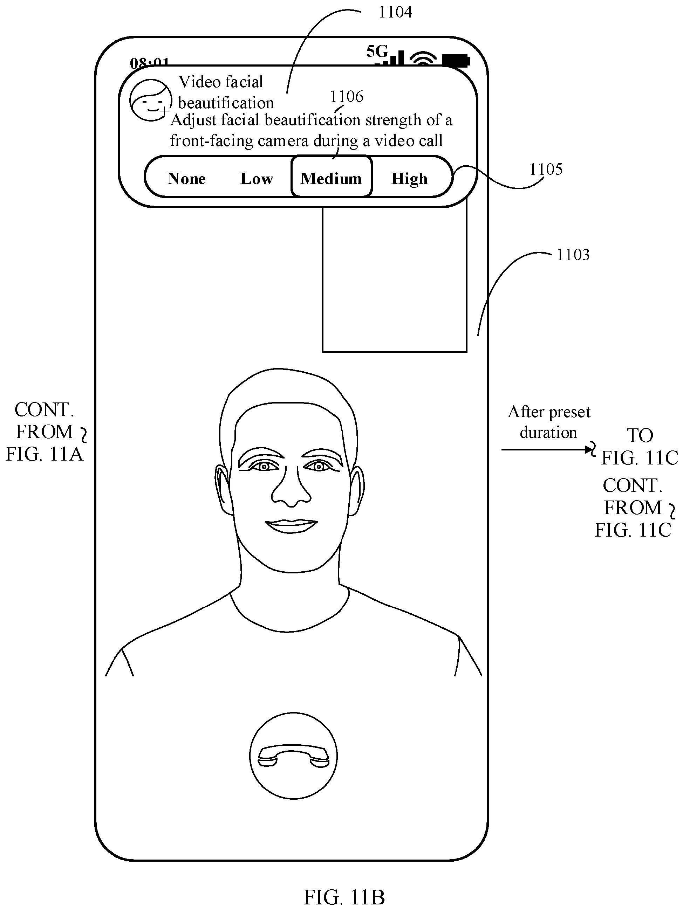

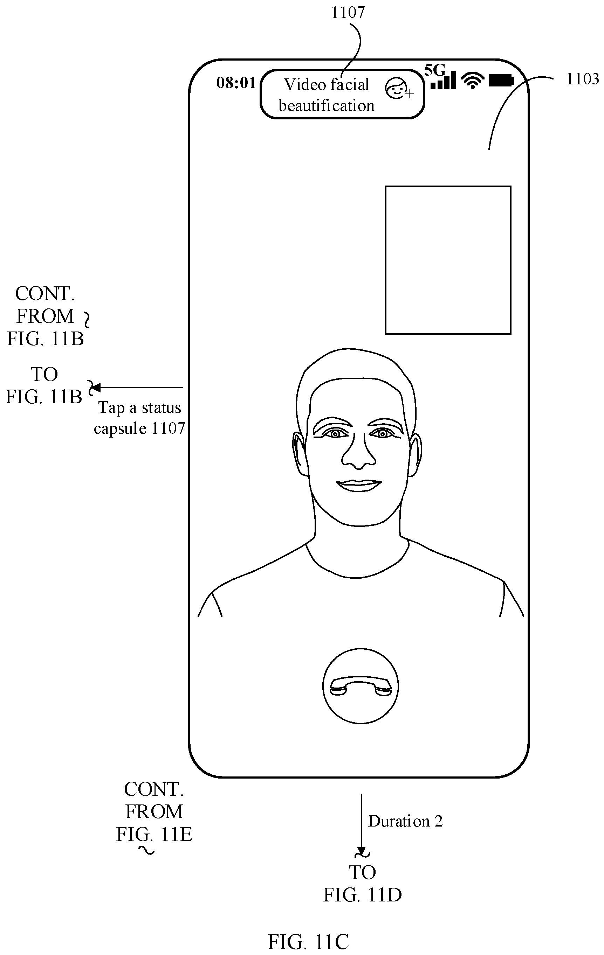

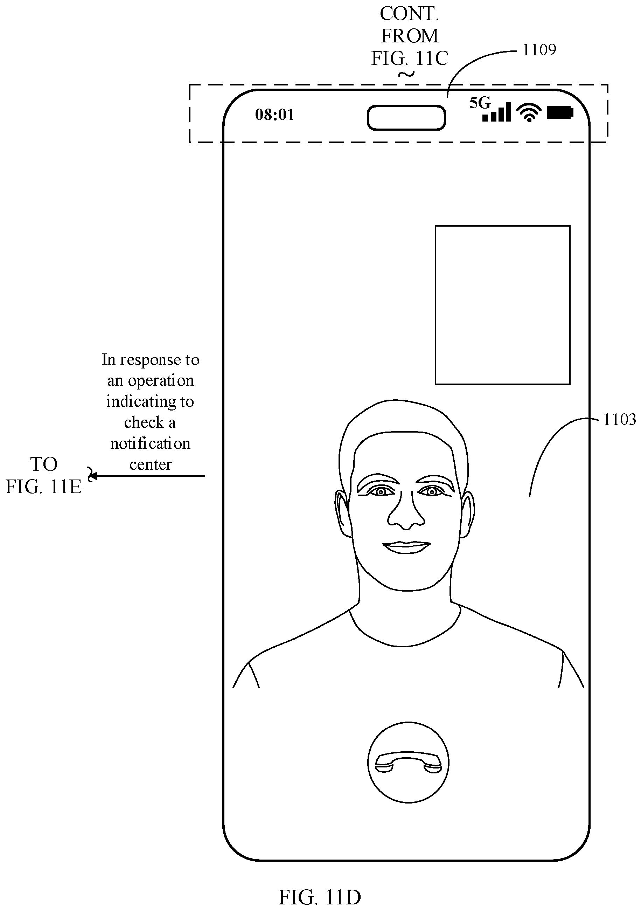

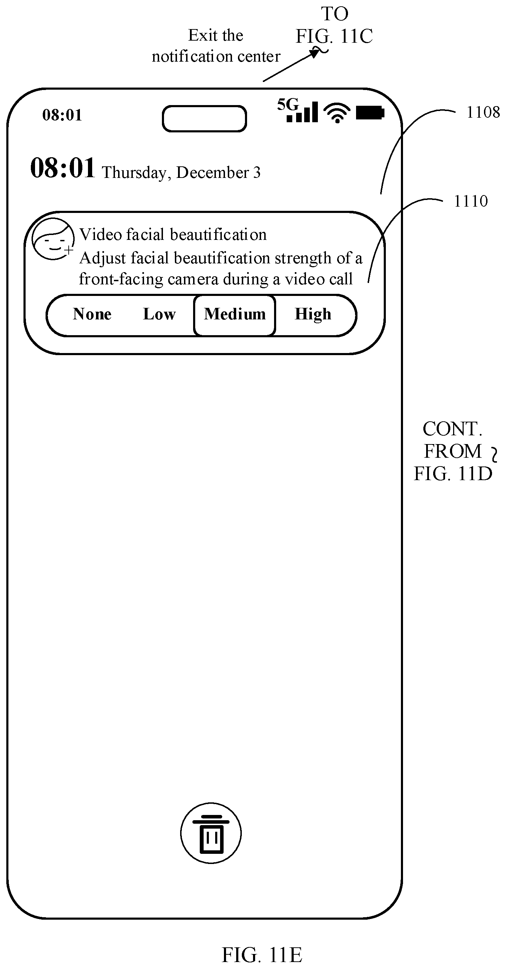

As shown in FIG. 11A, FIG. 11B, FIG. 11C, FIG. 11D, and FIG. 11E, the electronic device receives a video incoming call request from B, and displays a dynamic notification 1101 in response to the video incoming call request, where the dynamic notification 1101 includes a control 1102 indicating to answer the video incoming call. A video call interface 1103 is displayed in response to a tap operation performed by the user on the control 1102.

As shown in FIG. 11A, FIG. 11B, FIG. 11C, FIG. 11D, and FIG. 11E, in response to the tap operation performed by the user on the control 1102, the electronic device may assess that the facial beautification control function needs to be pushed to the user in a current scenario. Correspondingly, the electronic device may display a control card 1104. The control card 1104 shows a function control corresponding to the facial beautification control function, for example, a facial beautification strength control bar 1105. The control card 1104 is a black card, and a display location is related to that of the front-facing camera hole, that is, when the control card 1104 is displayed, the front-facing camera is embedded into the control card 1104 to hide the front-facing camera hole.

For example, the electronic device may configure, in response to an operation performed by the user on the facial beautification strength control bar 1105, a facial beautification processing level for image data collected in real time. As shown in FIG. 11A, FIG. 11B, FIG. 11C, FIG. 11D, and FIG. 11E, in response to the user selecting a control 1106 in the facial beautification strength control bar 1105, the electronic device performs facial beautification processing on the collected image data according to a rule of a medium facial beautification level, to optimize the collected image data.

Facial beautification processing levels include none, a low facial beautification level, a medium facial beautification level, and a high facial beautification level. None means that no facial beautification processing is performed on the image data. The low facial beautification level, the medium facial beautification level, and the high facial beautification level all mean that facial beautification processing needs to be performed on the image data. Different levels correspond to different facial beautification processing rules, for example, the low facial beautification level indicates the fewest facial beautification processing items that need to be performed, the high facial beautification level indicates the most facial beautification processing items that need to be performed, and the medium facial beautification level indicates that facial beautification processing items that need to be performed are more than those of the low facial beautification level but less than those of the high facial beautification level. In this way, a similarity between image data obtained after low facial beautification processing and the original image data is a similarity a; a similarity between image data obtained after medium facial beautification processing and the original image data is a similarity b; and a similarity between image data obtained after facial beautification processing and the original image data is a similarity c. The similarity a is higher than the similarity b, and the similarity b is higher than the similarity c.

As shown in FIG. 11A, FIG. 11B, FIG. 11C, FIG. 11D, and FIG. 11E, when display duration of the control card 1104 reaches preset duration (5 seconds) and an operation for the control card 1104 is not detected, display of the control card 1104 is canceled and a status capsule 1107 is displayed. It may be understood that the electronic device may trigger display of the control card 1104 again in response to an operation performed by the user on the status capsule 1107, thereby facilitating the user in adjusting the facial beautification processing level.

Within the duration 2 of displaying the status capsule 1107, if the operation for the status capsule 1107 is not received, the electronic device may cancel display of the status capsule 1107.

After display of the status capsule 1107 is canceled, the electronic device detects an operation of the user that indicates to check a notification center, and displays a notification center interface 1108, where the notification center interface 1108 includes a control card 1110. Display content of the control card 1110 is the same as that of the control card 1104, and a color of the control card 1110 is not specifically limited.

For example, the operation indicating to check the notification center may be a swipe-down operation relative to a status bar 1109, where a start point of the swipe-down operation relative to the status bar 1109 is located in a touch hot zone of the status bar 1109.

In some embodiments, the electronic device displays the video call interface 1103 again and displays the status capsule 1107 again in response to an operation indicating to exit the notification center interface 1108. Display of the status capsule 1107 is canceled after the status capsule 1107 is displayed for the duration 2 again.

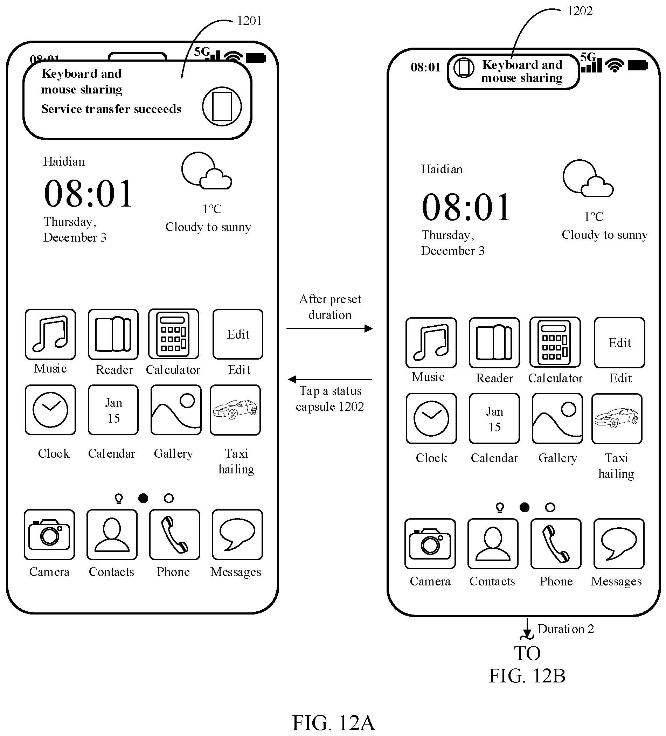

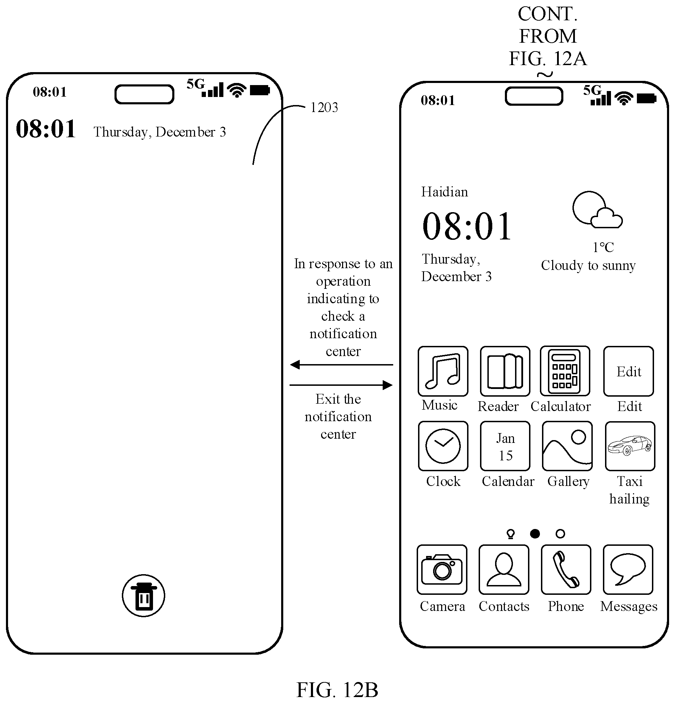

In some embodiments, display duration of the status feedback capsule may also be preconfigured as the duration 2. As shown in FIG. 12A and FIG. 12B, when a keyboard and mouse sharing channel between the electronic device and another device (for example, a notebook computer) is established, the electronic device may display a notification 1201. When the notification 1201 is displayed for preset duration and an operation performed by the user on the notification 1201 is not received, display of the notification 1201 is canceled, and a status capsule 1202 is displayed. For example, the electronic device may display the notification 1201 again in response to the user tapping the status capsule 1202.

When the status capsule 1202 is displayed for the duration 2 and an operation performed by the user on the status capsule 1202 is not detected, the electronic device may cancel display of the status capsule 1202.

Different from the scenario control capsule, after display of the status feedback capsule (for example, the status capsule 1202) is canceled, a reminder pushed by the status feedback capsule is no longer remained. As shown in FIG. 12A and FIG. 12B, after display of the status capsule 1202 is canceled, a notification center interface 1203 is displayed in response to an operation of the user that indicates to check a notification center. The notification center 1203 does not include the notification 1201. In addition, the notification 1201 is no longer displayed in response to an operation of the user that indicates to exit the notification center interface 1203.

In some embodiments, when a status capsule (for example, referred to as an original status capsule) is already displayed on the status bar, if the scenario control capsule needs to be displayed, the scenario control capsule may be overlaid on and displayed above the original status capsule. After the duration 2, display of the scenario control capsule is canceled to expose the original status capsule.

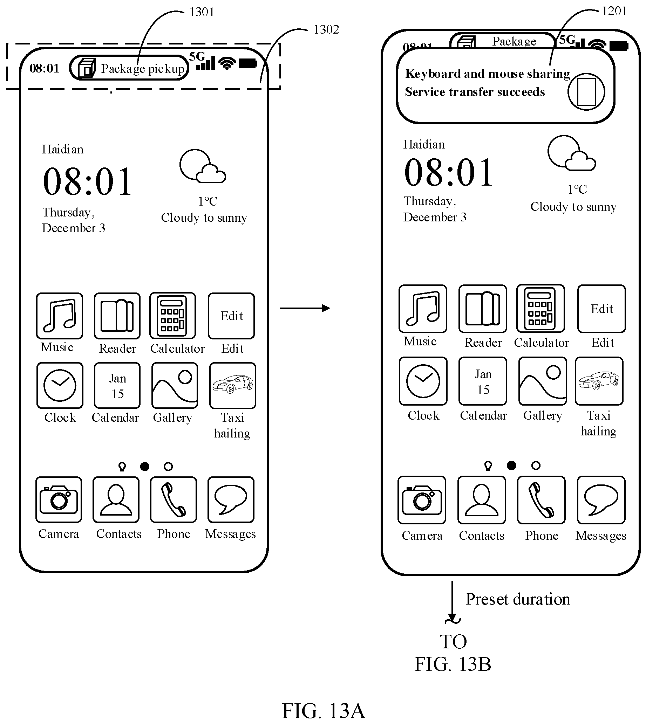

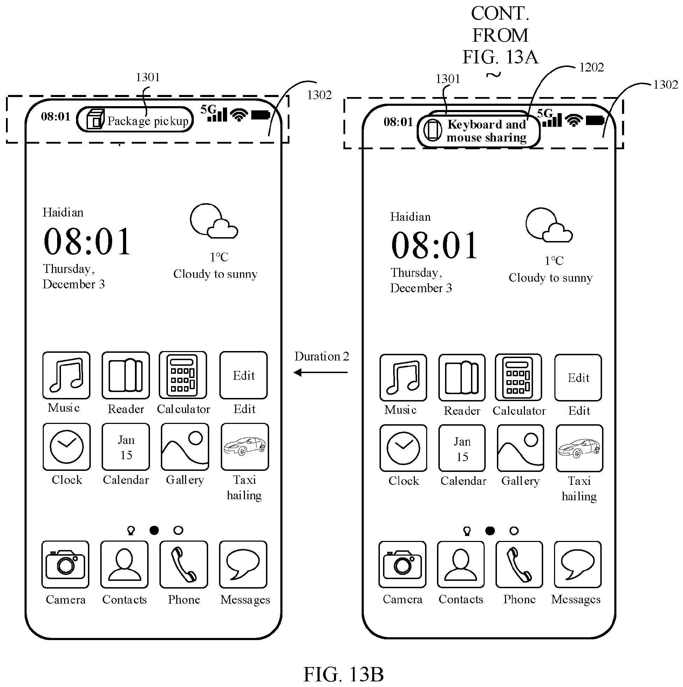

As shown in FIG. 13A and FIG. 13B, a status capsule 1301 is displayed on a status bar 1302, where the status capsule 1301 is used to push the package pickup information. The notification 1201 is displayed in response to the keyboard and mouse sharing channel being established with the another device. When the notification 1201 is displayed for preset duration and an operation performed by the user on the notification 1201 is not received, display of the notification 1201 is canceled, and the status capsule 1202 is displayed on the status bar 1302.

For example, the status capsule 1202 is overlaid on the status capsule 1301. When the status capsule 1202 is displayed for the duration 2 and an operation performed by the user on the status capsule 1202 is not detected, the electronic device may cancel display of the status capsule 1202 to expose the status capsule 1301.

In the foregoing embodiment, display duration of different types of status capsules are managed in different manners. Therefore, it is ensured that the object pushed by the status capsule can be effectively delivered to the user, and the pushed object can be prevented from causing excessive interference to the user.

In some embodiments, the electronic device may hide a status capsule in the status bar or redisplay a hidden status capsule in response to an operation of the user. In some other embodiments, a dynamic service capsule already hidden by the electronic device may be automatically redisplayed when a corresponding service enters a new workflow node.

The following describes, with reference to the accompanying drawings and by using a scenario in which one status capsule is displayed on the status bar as an example, a manner of hiding or redisplaying the status capsule.

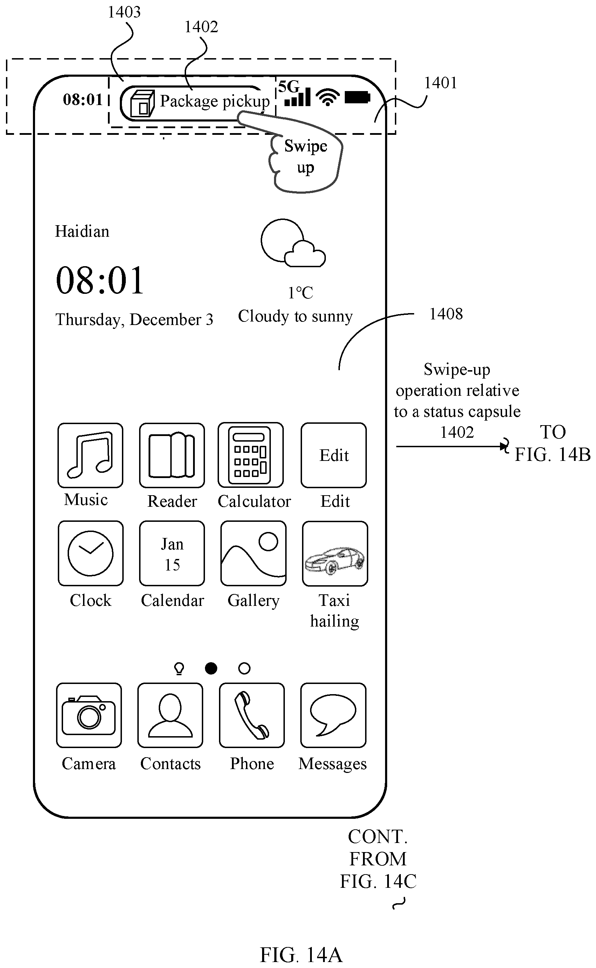

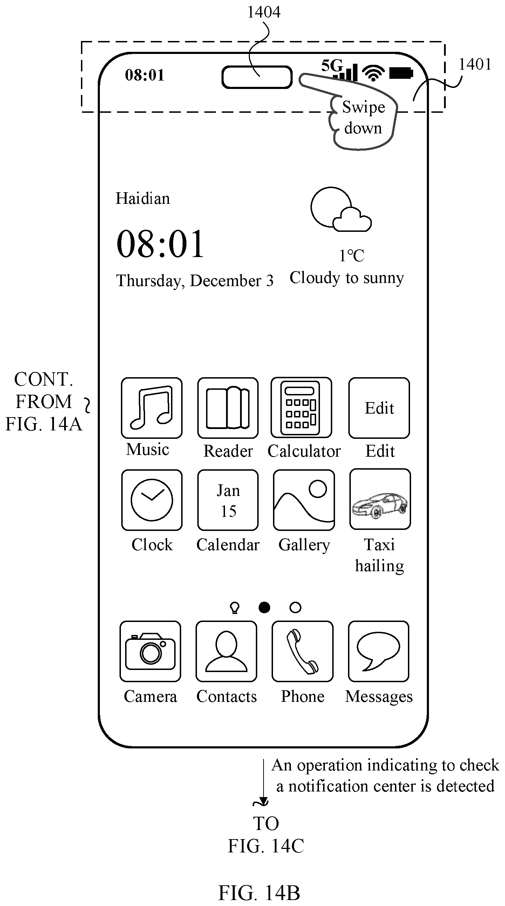

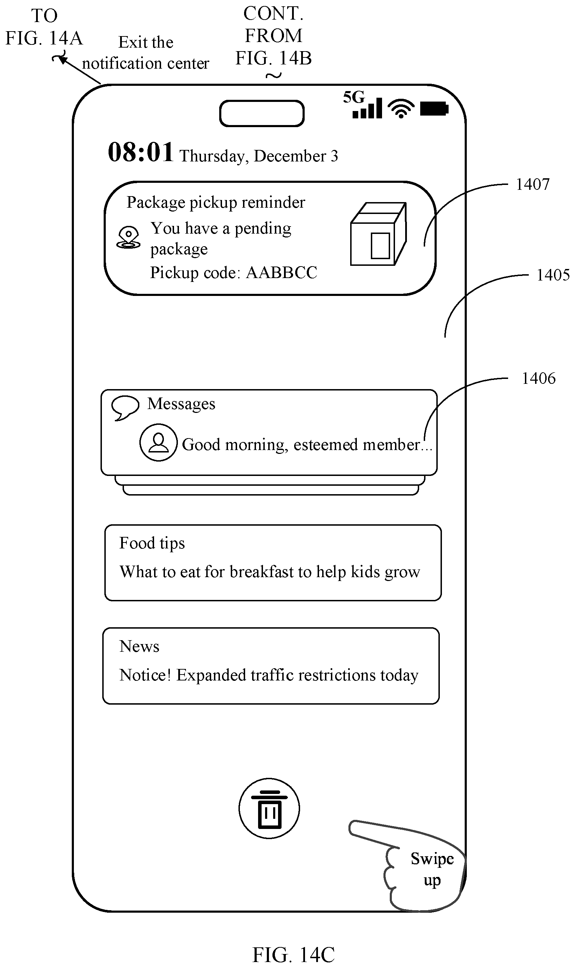

In an example scenario, as shown in FIG. 14A, FIG. 14B, and FIG. 14C, the electronic device displays a main interface 1408, and displays a status capsule 1402 on a status bar 1401, where the status capsule 1402 is used to push the package pickup information. The status capsule 1402 correspondingly has a touch hot zone 1403. The electronic device detects an operation performed by the user on the touch hot zone 1403, which may be considered as an operation for the status capsule 1402. An area of the touch hot zone 1403 is slightly greater than a display area actually occupied by the status capsule 1402.

As shown in FIG. 14A, FIG. 14B, and FIG. 14C, display of the status capsule 1402 may be canceled in response to a swipe-up operation performed by the user relative to the status capsule 1402, for example, a swipe-up operation in which a start point is located in the touch hot zone 1403. This may also be referred to as hiding the status capsule 1402.

In addition, in some embodiments, a capsule 1404 may be further displayed on the status bar 1401 after display of the status capsule 1402 is canceled. The capsule 1404 does not display content, and occupies a smaller display area than a display area of the status capsule 1402. In addition, in common with the status capsule 1402, the front-facing camera hole can be occluded. In some other examples, the capsule used to hide the front-facing camera hole may alternatively be not displayed after display of the status capsule 1402 is canceled.

As shown in FIG. 14A, FIG. 14B, and FIG. 14C, after display of the status capsule 1402 is canceled, a notification center interface 1405 is displayed in response to an operation of the user that indicates to check a notification center, for example, swipe-down relative to the status bar 1401 (a start point of swipe-down is located in the touch hot zone of the status bar 1401). The notification center interface 1405 includes an ordinary notification that has been pushed to the user and that has not been processed by the user, for example, an application message 1406 from a Messages application. The notification center interface 1405 further includes a notification card 1407 used to push the package pickup information.

As shown in FIG. 14A, FIG. 14B, and FIG. 14C, in response to an operation of the user that indicates to exit the notification center, for example, a swipe-up operation performed by the user on the notification center interface 1405, display of the notification center interface 1405 is canceled, the main interface 1408 is displayed again, and the status capsule 1402 is displayed on the status bar 1401. This may also be referred to as redisplaying the status capsule 1402.

In another embodiment, after the status capsule 1402 is hidden, in response to a swipe-down operation relative to the status bar 1401, the electronic device may alternatively skip the step of displaying the notification center interface and directly redisplay the status capsule 1402.

In a possible embodiment, after the status capsule 1402 is hidden, if the swipe-down operation relative to the status bar 1401 is detected and a start point of the swipe-down operation is located on a left side of the status bar 1401, the electronic device displays the notification center interface 1405. If the swipe-down operation relative to the status bar 1401 is detected and the start point of the swipe-down operation is located on a right side of the status bar 1401, the step of displaying the notification center interface is skipped and the status capsule 1402 is directly redisplayed.

In another possible embodiment, after the status capsule 1402 is hidden, if the swipe-down operation relative to the status bar 1401 is detected and a swiping distance (a length of a swiping trajectory) corresponding to the swipe-down operation is less than a preset threshold, the step of displaying the notification center interface is skipped, and the status capsule 1402 is directly redisplayed. If the swipe-down operation relative to the status bar 1401 is detected and the swiping distance corresponding to the swipe-down operation is greater than or equal to the preset threshold, the electronic device displays the notification center interface 1405.

In another possible embodiment, after the status capsule 1402 is hidden, if the swipe-down operation relative to the status bar 1401 is detected and a start point (a start point of the swiping trajectory) of the swipe-down operation is located in the touch hot zone near the front-facing camera hole, the step of displaying the notification center interface is skipped, and the status capsule 1402 is directly redisplayed. Otherwise, the notification center interface 1405 is displayed.

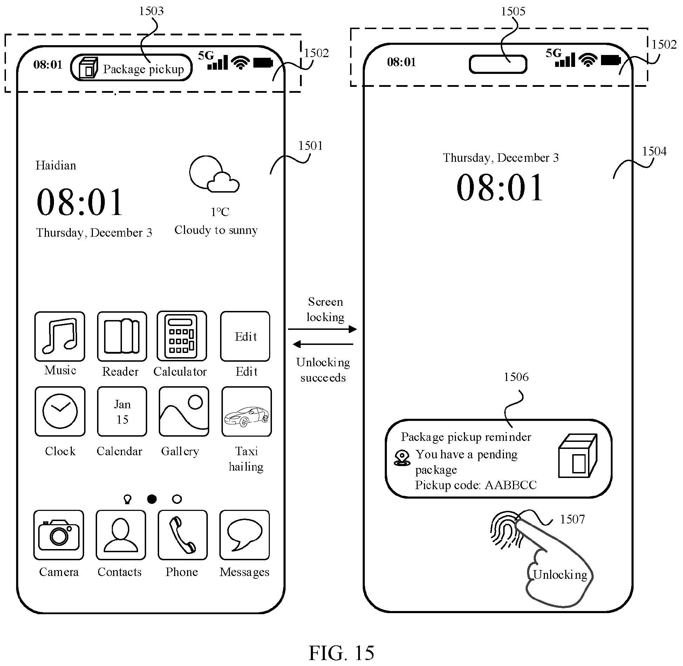

In another example scenario, as shown in FIG. 15, the electronic device displays a main interface 1501, and displays a status capsule 1503 on a status bar 1502, where the status capsule 1503 is used to push the package pickup information.

In some embodiments, the electronic device may detect an operation of the user that indicates screen locking. In response to the operation of the user indicates screen locking, for example, in response to detecting that the user presses a power button, the electronic device may display a lock screen interface 1504, where the lock screen interface 1504 includes a lock screen card 1506, the lock screen card 1506 is also used to display the package pickup information, and display more package pickup information than that displayed by the status capsule 1503. Correspondingly, the electronic device may further cancel display of the status capsule 1503 in response to the operation of the user that indicates screen locking, to avoid repeated information pushing.

In some examples, as shown in FIG. 15, after display of the status capsule 1503 is canceled, a capsule 1505 may be further displayed on the status bar 1502. No content is displayed in the capsule 1505, so that the front-facing camera hole can be hidden. In some other examples, after display of the status capsule 1503 is canceled, the capsule may not be displayed on the status bar 1502 to expose the front-facing camera hole.

In addition, when an operation performed by the user on the lock screen card 1506 is not received, the electronic device may perform an unlocking processing procedure in response to an operation of the user that indicates unlocking, for example, touching an unlock region 1507 by a finger of the user. When unlocking succeeds, the main interface 1501 is displayed again, display of the capsule 1505 is canceled, and the status capsule 1503 is displayed on the status bar 1502 again.

In some embodiments, during display of the lock screen card 1506, the electronic device may further process the lock screen card 1506 in response to an operation of the user.

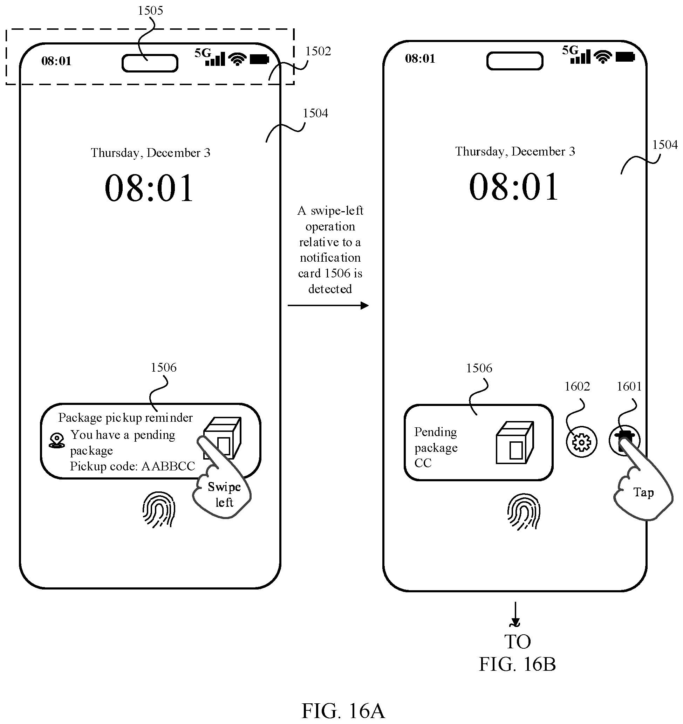

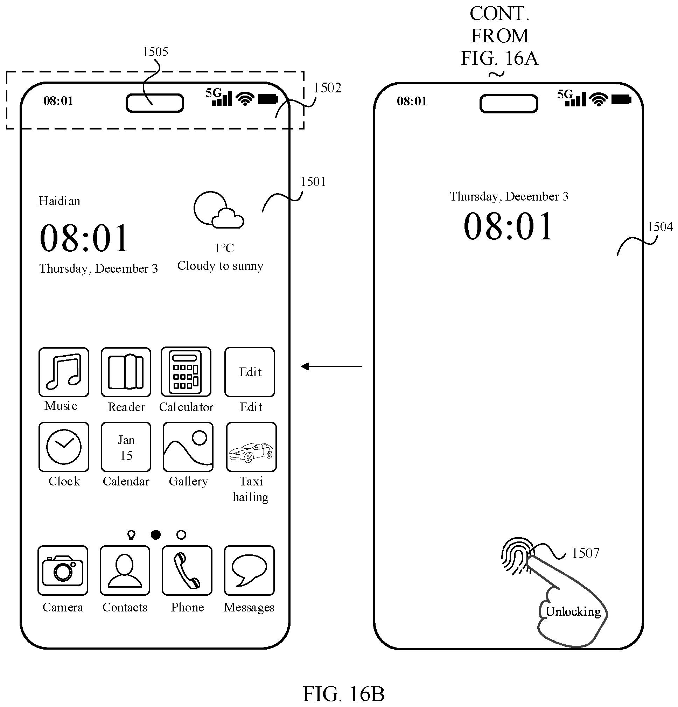

For example, as shown in FIG. 16A and FIG. 16B, the electronic device displays the lock screen interface 1504 including the lock screen card 1506. The electronic device displays the capsule 1505 on the status bar 1505, and no content is displayed in the capsule 1505 to hide the front-facing camera hole. Then, a delete control 1601 and a setting control 1602 are displayed in the lock screen interface 1504 in response to a swipe-left operation relative to the lock screen card 1506. The delete control 1601 and the setting control 1602 are displayed relative to the lock screen card 1506.

As shown in FIG. 16A and FIG. 16B, display of the lock screen card 1506 is canceled in response to a tap operation performed by the user on the delete control 1601. After display of the lock screen card 1506 is canceled, when unlocking succeeds, the electronic device displays the main interface 1501 in response to the unlock operation of the user, for example, touching the unlock region 1507. The capsule 1505 may be continuously displayed on the status bar 1502 when the main interface 1501 is displayed, and no content is displayed in the capsule 1505 to hide the front-facing camera hole.

Different from FIG. 15, the electronic device deletes the lock screen card 1506 in response to an operation of the user. The status capsule 1503 used to push the package pickup information is no longer displayed after the lock screen card 1506 is deleted and the electronic device is unlocked.

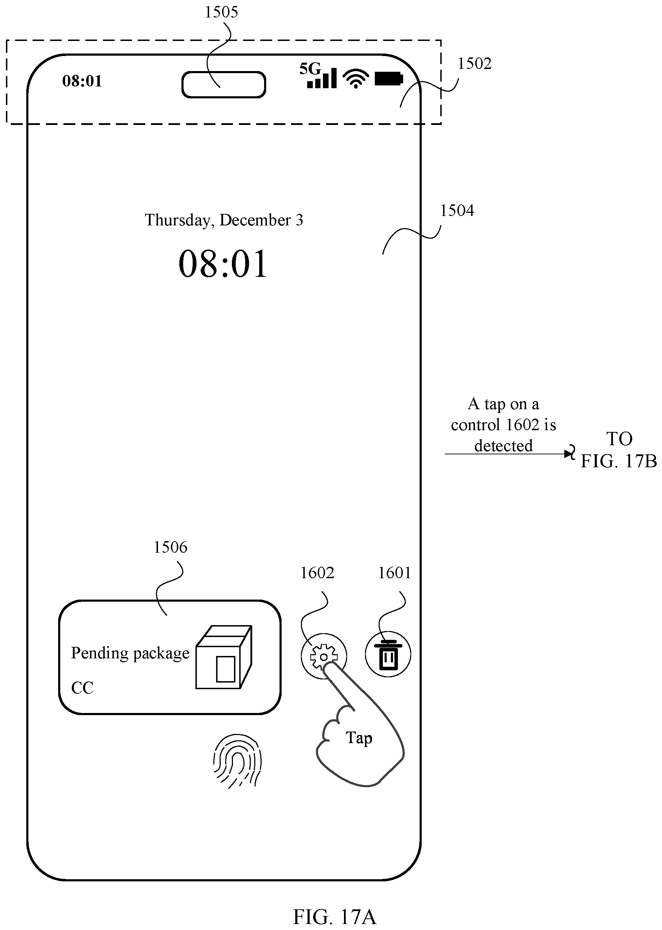

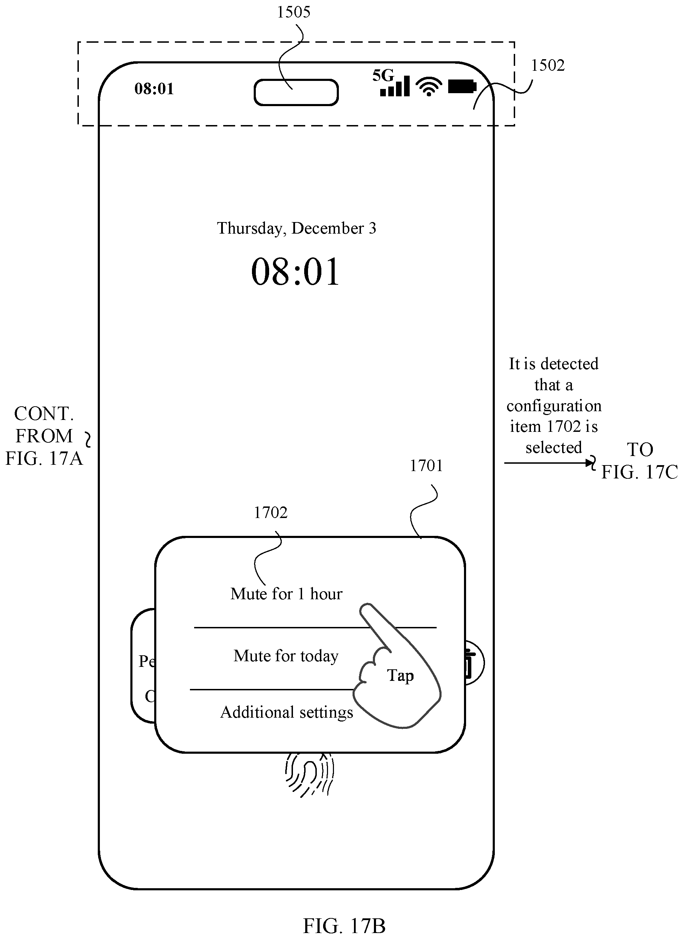

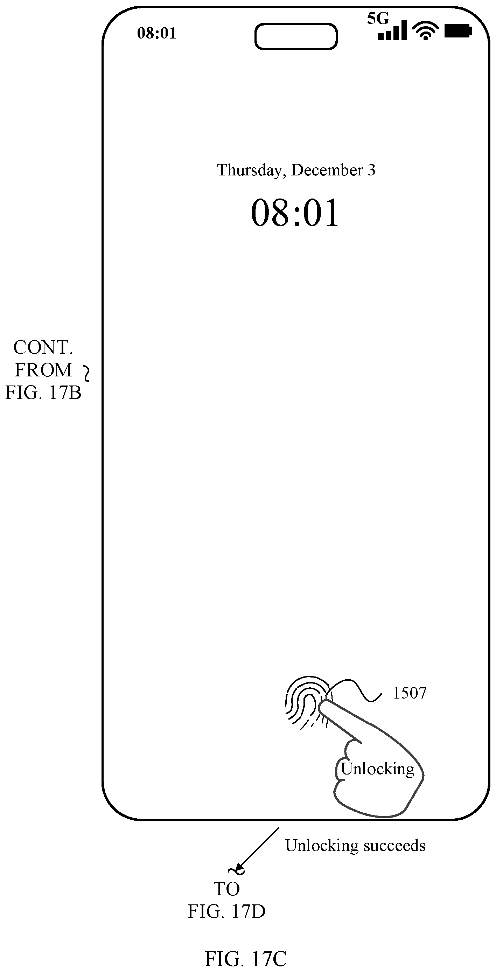

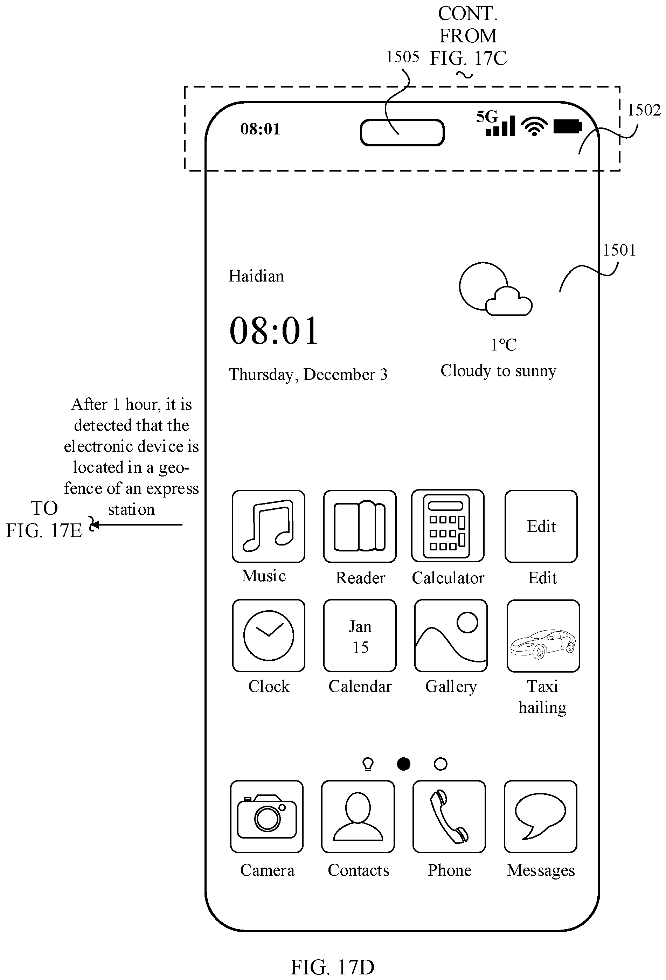

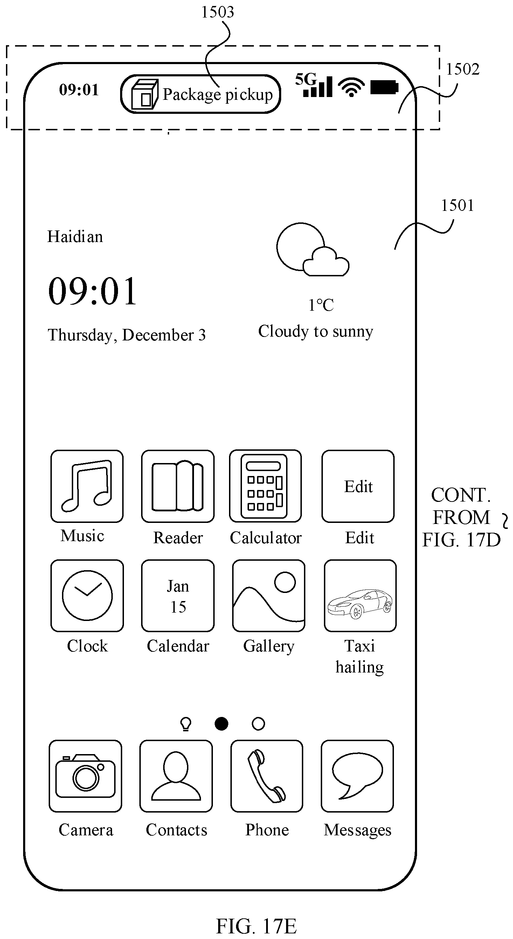

For another example, as shown in FIG. 17A, FIG. 17B, FIG. 17C, FIG. 17D, and FIG. 17E, a setting window 1701 is displayed in response to a tap operation performed by the user on the setting control 1602. The setting window 1701 includes a plurality of configuration items for the lock screen card 1506, for example, a configuration item 1702 for configuring "Mute for 1 hour". Display of the lock screen card 1506 is canceled in response to the user tapping the configuration item 1702. Similarly, in this scenario, in response to the unlock operation of the user, for example, touching the unlock region 1507, the electronic device displays the main interface 1501 if unlocking succeeds. In addition, the electronic device continuously displays the capsule 1505 on the status bar 1502, and no content is displayed in the capsule 1505 to hide the front-facing camera hole. After 1 hour, if the electronic device detects the geo-fence of the express station again, the electronic device may display the status capsule 1503 on the status bar 1502 again. Within 1 hour, even if the electronic device detects the geo-fence of the express station, the status capsule 1503 is not displayed.

In some embodiments, after display of the status capsule used to push the service information is canceled, if the service corresponding to the service information enters another workflow node from one workflow node, redisplay of the status capsule may be triggered.

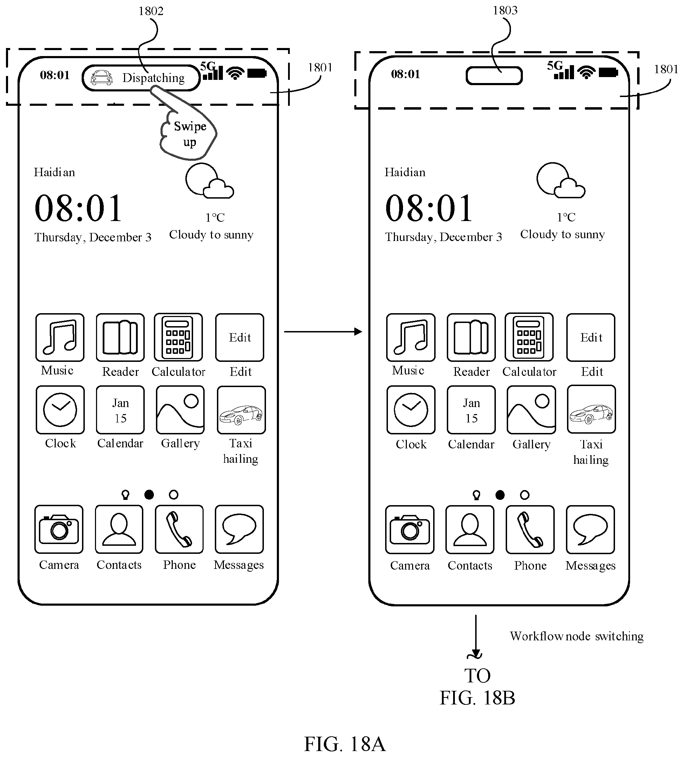

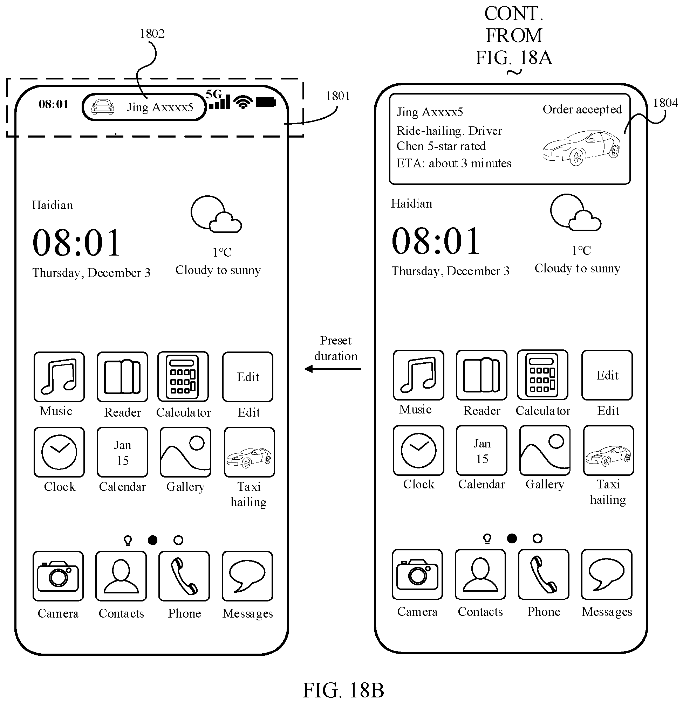

As shown in FIG. 18A and FIG. 18B, a status capsule 1802 is displayed on a status bar 1801 of the electronic device. The status capsule 1802 is used to display the taxi hailing service information, for example, the taxi hailing service information corresponding to the "platform dispatching" node.

The status capsule 1802 is hidden in response to a swipe-up operation performed by the user relative to the status capsule 1802. For example, display of the status capsule 1802 is canceled, and a capsule 1803 is displayed on the status bar 1801. No content is displayed in the capsule 1803. A display area of the capsule 1803 is less than that of the status capsule 1802. Both the capsule 1803 and the status capsule 1802 may be used to hidden the front-facing camera hole of the electronic device.

Then, the taxi hailing service enters the "driver heading to pickup" node from the "platform dispatching" node, and the electronic device displays a dynamic notification 1804 in response to workflow node switching. After the dynamic notification 1804 is displayed for preset duration, display of the dynamic notification 1804 is canceled, and the status capsule 1802 is displayed on the status bar 1801 again.

The following describes, with reference to the accompanying drawings and by using a scenario in which a plurality of status capsules are displayed on the status bar as an example, a manner of hiding or redisplaying the status capsules.

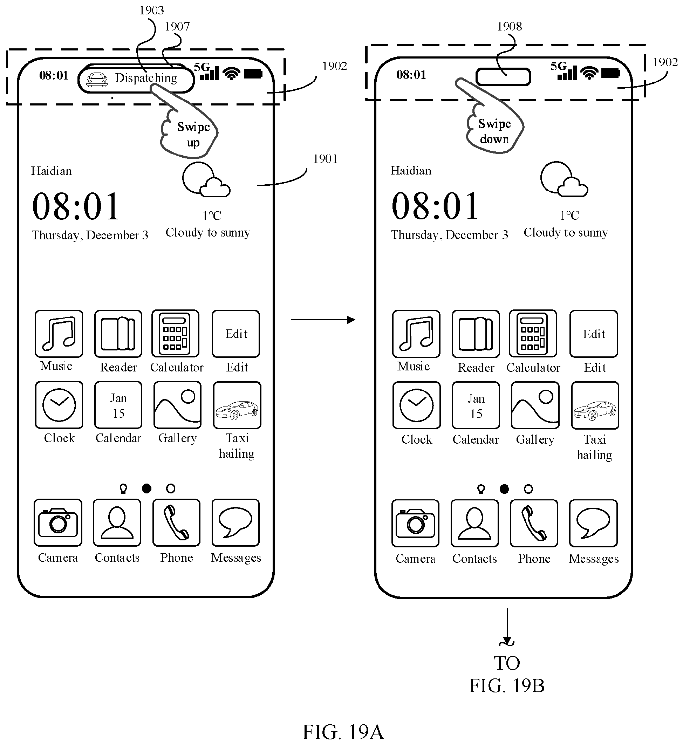

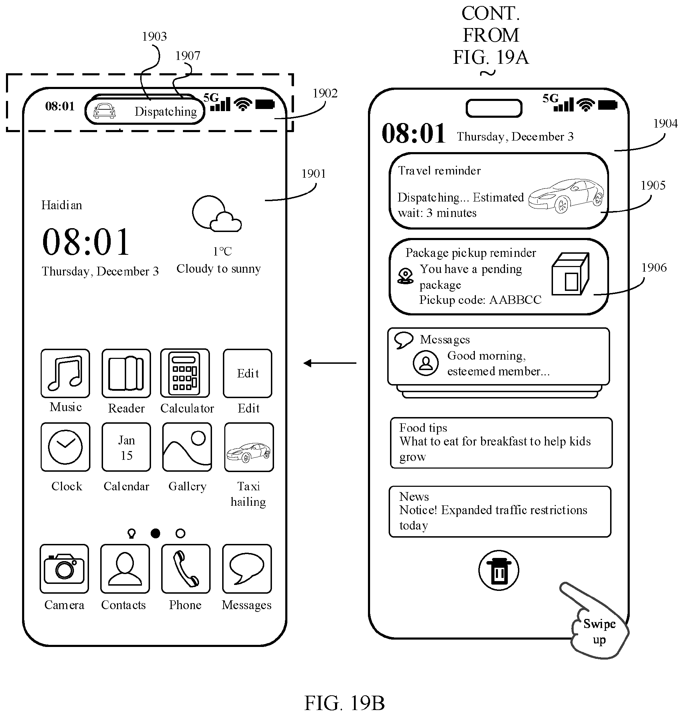

In an example scenario, as shown in FIG. 19A and FIG. 19B, the electronic device displays a main interface 1901, and displays a status capsule 1903 on a status bar 1902, where the status capsule 1903 is used to push the taxi hailing service information. The status capsule 1903 is overlaid on and displayed above a status capsule 1907, and the status capsule 1907 is used to push other service information.

It may be understood that when the status bar 1902 includes a plurality of status capsules, the plurality of status capsules may be overlaid based on most recent appearance time points of the status capsules, to ensure that a status capsule appearing most recently is overlaid on and displayed above other status capsules.

If a status capsule appears on the status bar at a time point a for the first time, a most recent appearance time point of the status capsule is the time point a. Then, display of the status capsule is canceled. The status capsule is redisplayed at a time point b. In this scenario, the most recent appearance time point is correspondingly updated to the time point b. After the status capsule is redisplayed, other capsules whose most recent appearance time points are earlier than the time point b are overlaid below the status capsule.

In another embodiment, if a priority of service information pushed by a status capsule a is higher than those of service information pushed by the other status capsules, the status capsule a may be overlaid on and displayed above the other status capsules. If priorities of service information pushed by the plurality of status capsules are the same, the plurality of status capsules are still overlaid based on the most recent appearance time points of the status capsules.

As shown in FIG. 19A and FIG. 19B, display of the status capsule 1903 and the status capsule 1907 may be canceled in response to a swipe-up operation performed by the user relative to the status capsule 1903. This may also be referred to as hiding the plurality of status capsules on the status bar 1902.

In another possible embodiment, display of only the status capsule 1903 may alternatively be canceled in response to a swipe-up operation performed by the user relative to the status capsule 1903. This is not specifically limited in the embodiments of this application.

In addition, in some embodiments, a capsule 1908 may be further displayed on the status bar 1902 after the plurality of status capsules on the status bar 1902 are hidden. The capsule 1908 does not display content, and occupies a smaller display area than display areas of the status capsule 1903 and the status capsule 1907. In addition, in common with the status capsule 1903 and the status capsule 1907, the front-facing camera hole can be occluded. In some other examples, the capsule used to hide the front-facing camera hole may alternatively be not displayed after display of the status capsule 1903 and the status capsule 1907 is canceled.

As shown in FIG. 19A and FIG. 19B, after the plurality of status capsules on the status bar 1902 are hidden, a notification center interface 1904 is displayed in response to an operation of the user that indicates to check a notification center, for example, swipe-down relative to the status bar 1902 (a start point of swipe-down is located in a touch hot zone of the status bar 1902). The notification center interface 1904 includes a notification card 1905 and a notification card 1906. The notification card 1905 is used to display the taxi hailing service information pushed by the status capsule 1903, and the notification card 1906 is used to display service information (for example, the package pickup information) pushed by the status capsule 1907. The notification card 1905 and the notification card 1906 are arranged from top to bottom in the notification center interface 1904. For example, corresponding notification cards may be arranged from top to bottom based on an overlay sequence of the status capsule 1903 and the status capsule 1907 on the status bar, to ensure that a notification card (for example, the notification card 1905) corresponding to a status capsule overlaid (for example, the status capsule 1903) on the status bar 1902 is arranged above a notification card (for example, the notification card 1906) corresponding to another status capsule (for example, the status capsule 1907).

It may be understood that the status bar 1902 includes M overlaid status capsules, and correspondingly, the notification center interface 1904 also includes notification cards of the M status capsules. M is a positive integer.

In some embodiments, the electronic device may delete or set a notification card in response to a swipe-left operation performed by the user on the notification card in the notification center interface, to implement details the same as those when the lock screen card is deleted or set in the lock screen interface. For details, refer to FIG. 16A and FIG. 16B and FIG. 17A, FIG. 17B, FIG. 17C, FIG. 17D, and FIG. 17E.

As shown in FIG. 19A and FIG. 19B, in response to an operation of the user that indicates to exit the notification center, for example, a swipe-up operation performed by the user on the notification center interface 1904, display of the notification center interface 1904 is canceled, the main interface 1901 is displayed again, and the status capsule 1903 and the status capsule 1907 are displayed on the status bar 1902, where the status capsule 1903 is still overlaid on the status capsule 1907.

In some embodiments, when the status capsule used to push the service information is displayed on the status bar, the user may interact with the status capsule through tapping.
1) For a status capsule that pushes glanceable information (for example, the taxi hailing service information or delivery information), the electronic device may display a corresponding dynamic notification in response to the user tapping the status capsule, to facilitate the user in quickly obtaining corresponding information without entering an application.

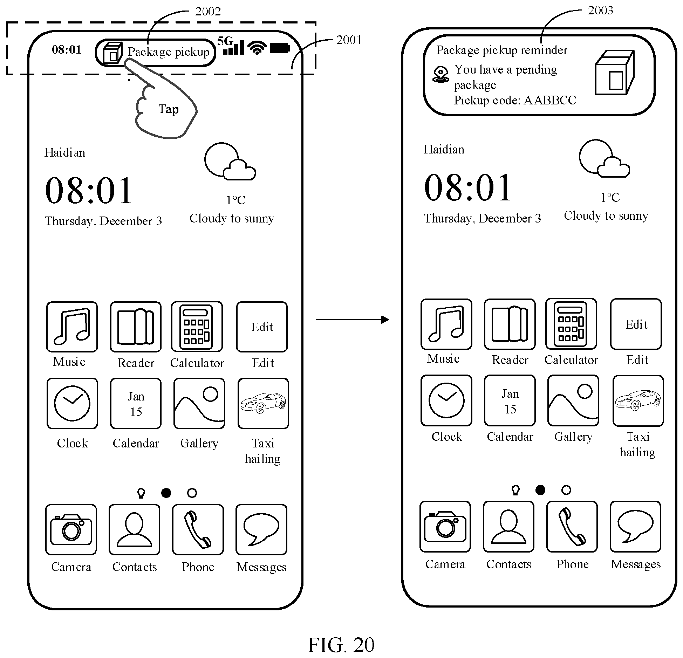

For example, as shown in FIG. 20, when a status bar 2001 includes a status capsule 2002, a dynamic notification 2003 corresponding to the status capsule 2002 may be displayed in response to the user tapping the status capsule 2002. Both the dynamic notification 2003 and the status capsule 2002 are used to display the package pickup information, and the dynamic notification 2003 displays more package pickup information than that displayed by the status capsule 2002. Display of the status capsule 2002 may be canceled after the dynamic notification 2003 is displayed, to avoid repeated information pushing.

2) For a status capsule indicating to quickly return to a related application (a call/game/the like), in response to the user tapping the status capsule, the related application of the status capsule may be triggered to run in the foreground, and an application interface provided by the application is displayed. It may be understood that the application that requires a quick return may provide, to the status capsule, an access interface for application interface navigation. In this way, the application interface of the application may be navigated and displayed through the access interface in response to the user tapping the status capsule.

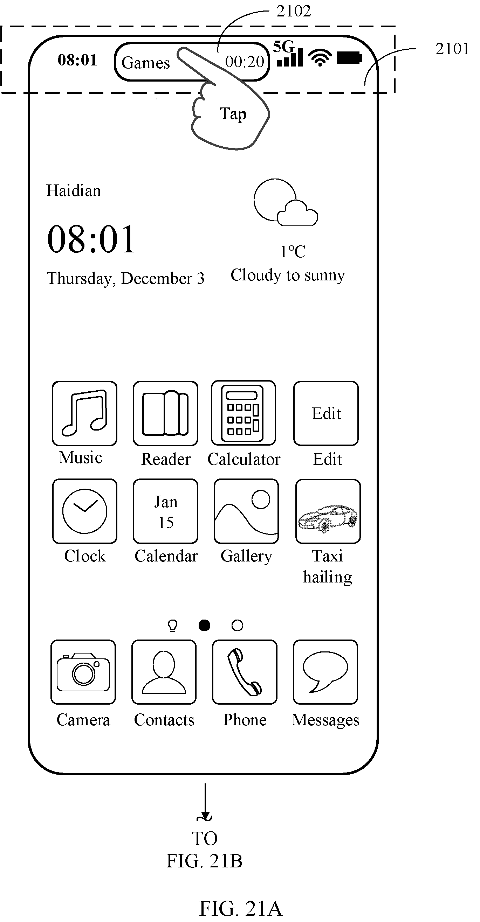

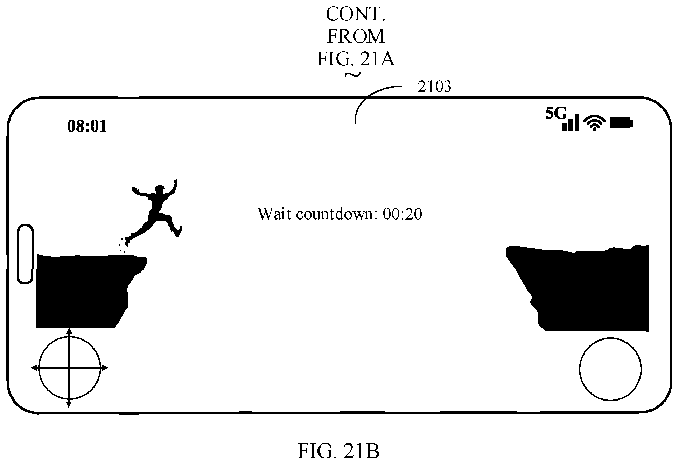

For example, as shown in FIG. 21A and FIG. 21B, a status bar 2101 includes a status capsule 2102, and the status capsule 2102 is used to push service information related to the game application. The electronic device may display, in response to the user tapping the status capsule 2102, an application interface 2103 provided by the application corresponding to the status capsule 2102.

3) If service information pushed by a status capsule comes from an application supporting a small multitask floating window, the small floating window of the application may be displayed in response to an operation of the user.

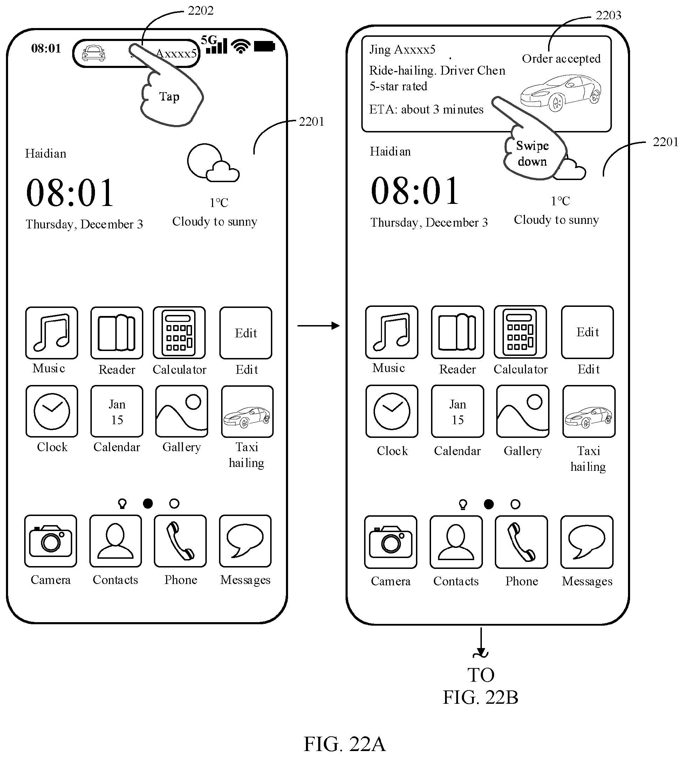

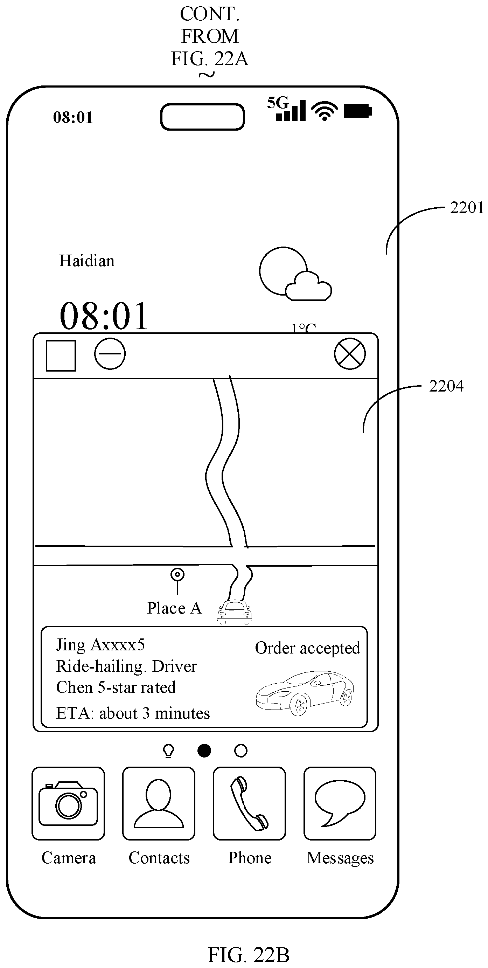

For example, as shown in FIG. 22A and FIG. 22B, the electronic device displays a main interface 2201. In addition, the electronic device further displays a status capsule 2202. A dynamic notification 2203 corresponding to the status capsule 2202 is displayed in response to the user tapping the status capsule 2202. The taxi hailing service information is displayed by both the dynamic notification 2203 and the status capsule 2202, and the dynamic notification 2203 displays more taxi hailing service information than that displayed by the status capsule 2202.

The taxi hailing service information comes from the taxi hailing application. When the taxi hailing application supports a small multitask floating window, a small multitask window 2204 is displayed in the main interface 2201 in response to a swipe-down operation performed by the user relative to the dynamic notification 2203, and more operations for the taxi hailing service may be completed by using the small multitask window 2204.

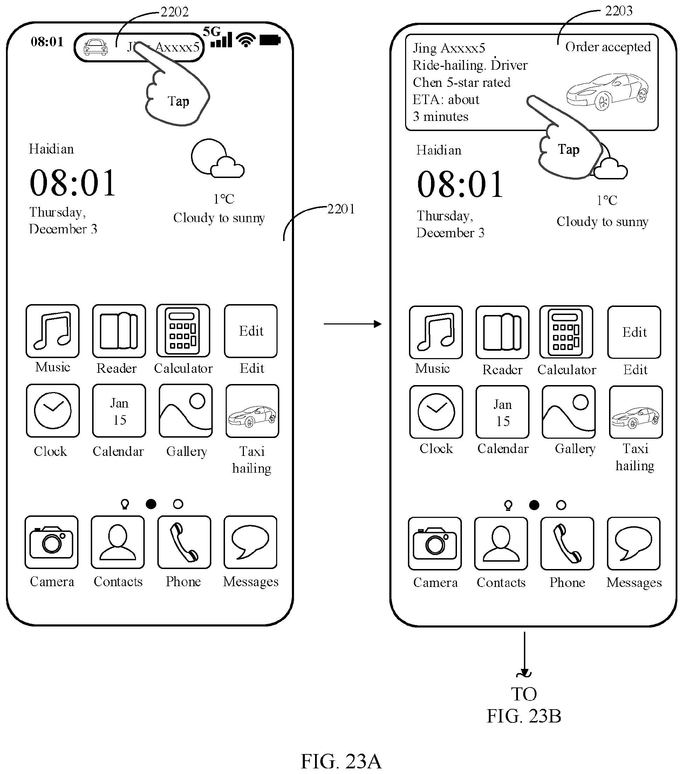

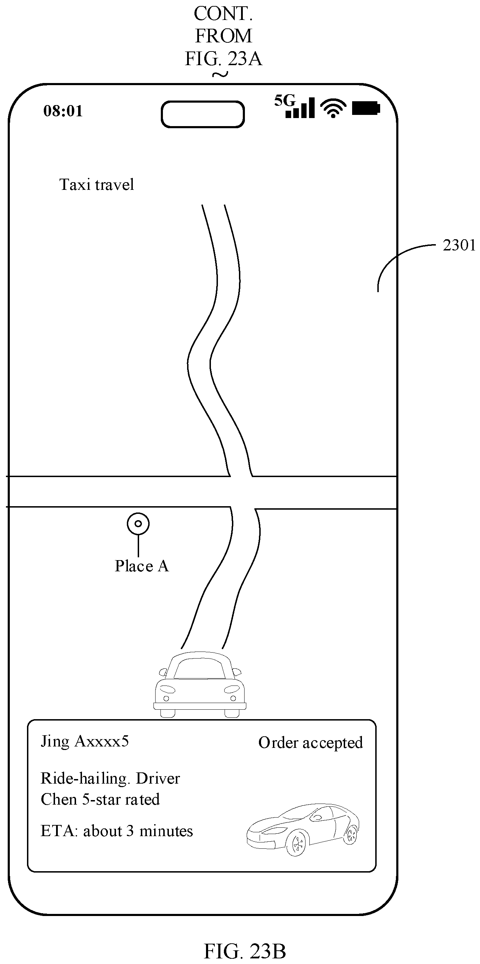

In another embodiment, as shown in FIG. 23A and FIG. 23B, during display of the dynamic notification 2203, the electronic device may display a taxi hailing service interface 2301 in response to the user tapping the dynamic notification 2203. The taxi hailing service interface 2301 displays the same content as that of the small multitask window 2204 in FIG. 22B, but occupies a larger display area, which facilitates an operation of the user.

In some embodiments, when the status bar has a plurality of status capsules, dynamic notifications corresponding to all the status capsules are expanded in response to an operation of tapping any status capsule.

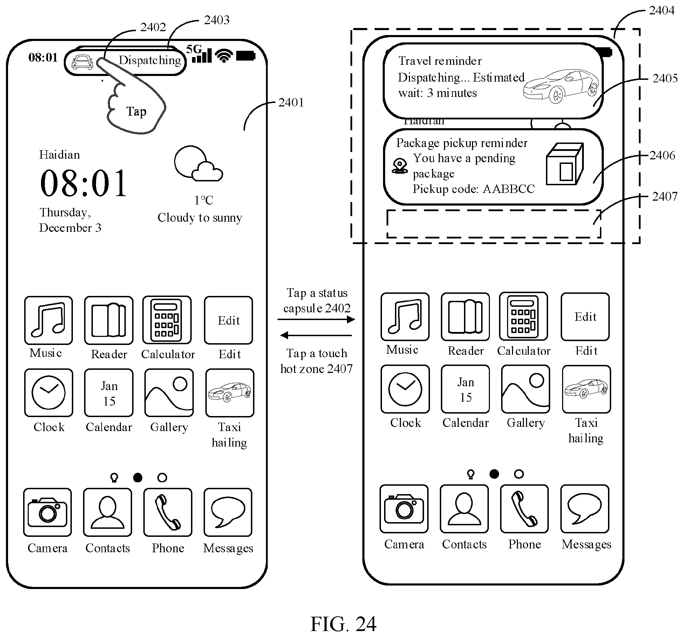

As shown in FIG. 24, the electronic device displays a main interface 2401, and the electronic device further displays a status capsule 2402 and a status capsule 2403. The status capsule 2402 and the status capsule 2403 are overlaid and displayed. Display of the plurality of overlaid status capsules is canceled and dynamic notifications corresponding to the status capsule 2402 and the status capsule 2403 are expanded and displayed in response to the user tapping the status capsule 2402.

For example, a dynamic notification 2405 corresponding to the status capsule 2402 and a dynamic notification 2406 corresponding to the status capsule 2403 are displayed in a display region 2404.

In another embodiment, blur processing may be further performed on a background of the display region 2404. A display height of the display region 2404 is related to a quantity of expanded status capsules. For example, when the electronic device displays more status capsules, more status capsules need to be expanded, and the display height of the display region 2404 is higher, so that notifications of all status capsules can be displayed in the display region 2404.

In addition, after the plurality of status capsules are expanded, corresponding dynamic notifications are arranged from top to bottom in the display region 2404 based on an overlay sequence of the status capsules, to ensure a dynamic notification corresponding to a status capsule overlaid above is arranged on an upper side of a dynamic notification corresponding to a status capsule overlaid below.

In some embodiments, as shown in FIG. 24, a dynamic notification 2406 is a notification arranged at a bottommost end in the display region 2404, and there is a touch hot zone 2407 on a lower side of the dynamic notification 2406. The expanded notifications are collapsed in response to the user tapping the touch hot zone 2407, and the plurality of overlaid status capsules are displayed again. The electronic device may also, in response to a swipe-up operation performed by the user on the display region 2404, collapse the expanded notifications, and display the plurality of overlaid status capsules again.

In another embodiment, the notifications of the plurality of status capsules may alternatively be collapsed through switching between a landscape mode and a portrait mode, switching between an inner screen and an outer screen, detecting a tap on a control indicating a return (for example, a back key or a home key), or the like.

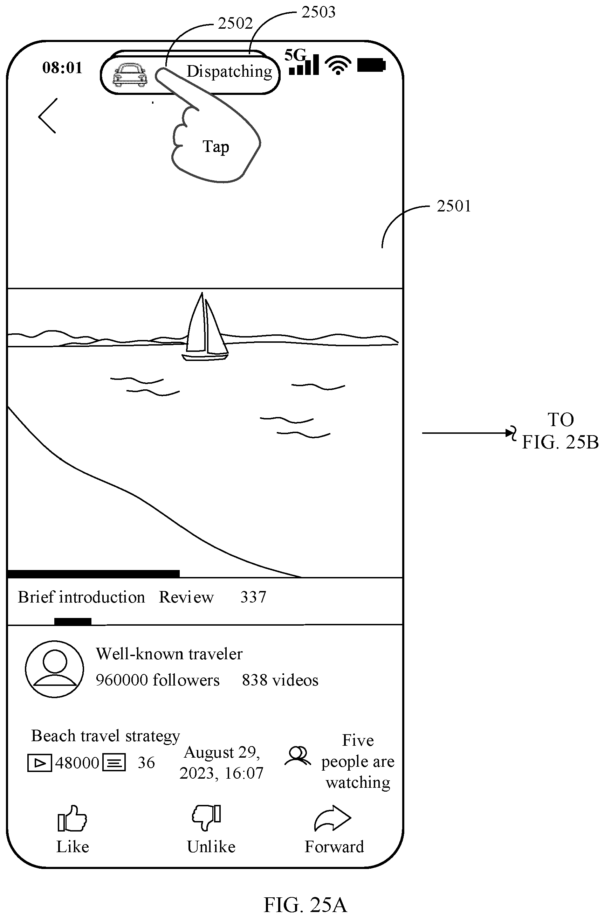

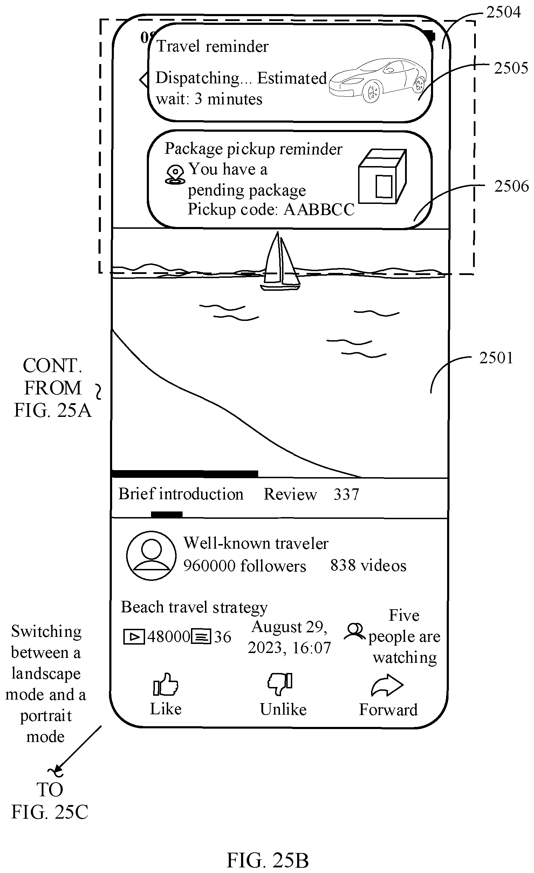

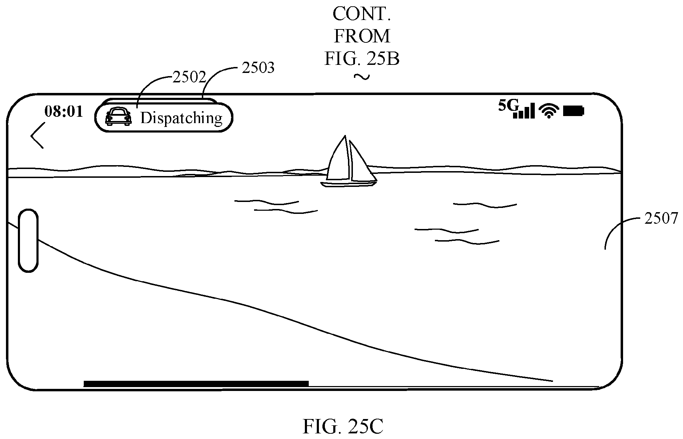

Switching between the landscape mode and the portrait mode is used as an example. As shown in FIG. 25A, FIG. 25B, and FIG. 25C, the electronic device displays a video playing interface 2501 in the portrait mode, and the electronic device further displays a status capsule 2502 and a status capsule 2503. The status capsule 2502 and the status capsule 2503 are overlaid and displayed. Display of the plurality of overlaid status capsules is canceled and dynamic notifications corresponding to the status capsule 2502 and the status capsule 2503 are expanded and displayed in response to the user tapping the status capsule 2502.

For example, a dynamic notification 2505 corresponding to the status capsule 2502 and a dynamic notification 2506 corresponding to the status capsule 2503 are displayed in a display region 2504.

In another embodiment, blur processing may be further performed on a background of the display region 2504. A display height of the display region 2504 is related to a quantity of expanded status capsules.

In response to detecting an operation of the user that indicates to switch to the landscape mode for display, the video playing interface 2507 is displayed in the landscape mode, the expanded notifications are collapsed, and the plurality of overlaid status capsules are displayed again, for example, the overlaid status capsule 2502 and status capsule 2503 are displayed again.

In some embodiments, when the electronic device enables an eye-tracking interaction function, a status capsule used to push service information is displayed on a status bar, and the user may interact with the status capsule through gazing.

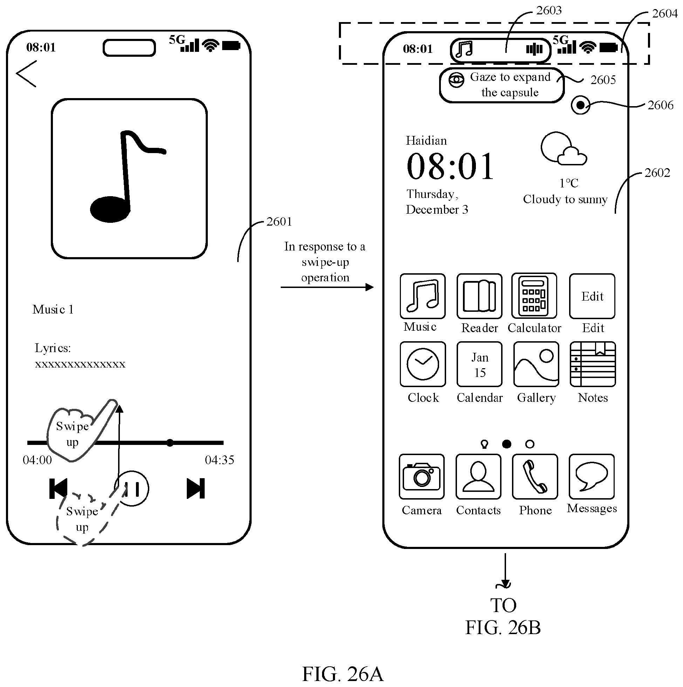

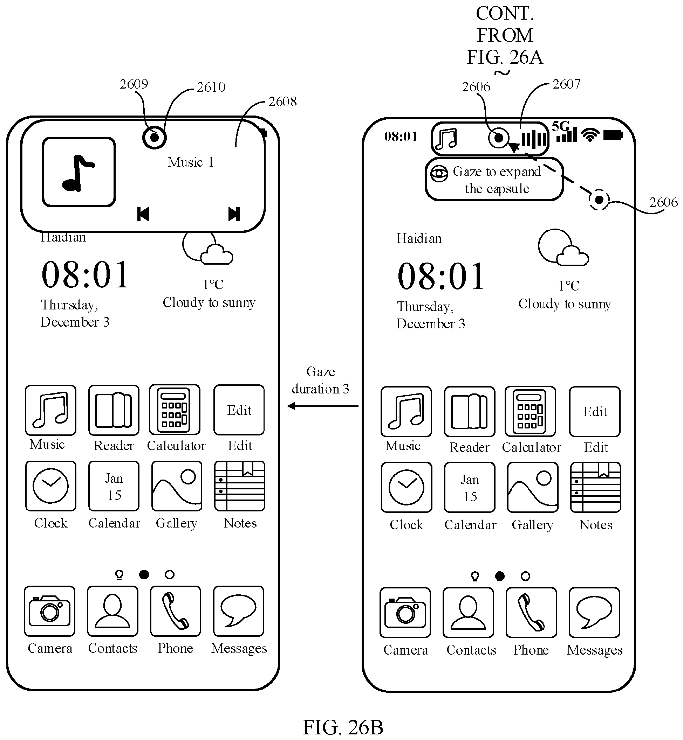

As shown in FIG. 26A and FIG. 26B, the music application in the electronic device runs in the foreground, and the electronic device displays a music playing interface 2601 provided by the music application. The music playing interface 2601 may display information about a track (music 1) that is being played. The user may learn of the running status of the music application based on the music playing interface 2601. When the music playing interface 2601 is displayed, the electronic device may move the music application to the background for running in response to an operation of the user. As shown in FIG. 26A and FIG. 26B, the electronic device may display a main interface 2602 in response to a swipe-up operation of the user. In a process in which the electronic device switches from the music playing interface 2601 to the main interface 2602, a status capsule 2603 is displayed. When the electronic device enables the eye-tracking interaction function, and after the status capsule 2603 is displayed, the electronic device is triggered to enable eye-tracking recognition, to track a location of a gaze point of the user on the screen in real time. In addition, the electronic device may further display a gaze point icon 2606. A display location of the gaze point icon 2606 is the location of the gaze point of the user on the screen that is detected by the electronic device. It may be understood that when the status capsule 2603 on a status bar 2604 disappears, the electronic device may also stop eye-tracking recognition and cancel display of the gaze point icon 2606.

In addition, after the electronic device enables the eye-tracking interaction function, when the status capsule appears on the status bar 2604 for the nth time, a reminder capsule 2605 may be displayed. The reminder capsule 2605 is used to prompt that a dynamic notification corresponding to the status capsule may be expanded by gazing at the status capsule on the status bar 2604.

Then, as it is detected that the gaze point of the user moves to be within a display range of the status capsule 2603, the gaze point icon 2606 moves to be within the display range of the status capsule 2603. After the gaze point icon 2606 moves to be within the display range of the status capsule 2603, a status capsule 2607 is displayed, and the status capsule 2607 and the status capsule 2603 are a same capsule. Compared with the status capsule 2603, a display area occupied by the status capsule 2607 increases by 2%. The status capsule 2603 is replaced with the status capsule 2607 to prompt that the user already gazes at the status capsule on the status bar 2604.

Then, if the gaze point icon 2606 dwells within a display range of the status capsule 2607, and dwell duration is greater than duration 3 (for example, 300 ms), display of the status capsule 2607 is canceled, and a dynamic notification 2608 is displayed. The dynamic notification 2608 is also used to push the service information of the music application.

The electronic device enables eye-tracking recognition again, and tracks the location of the gaze point of the user on the screen in real time. In addition, the electronic device may display a gaze point icon 2609. Dwell duration of the gaze point of the user in a display range of the dynamic notification 2608 may be displayed on the gaze point icon 2609. For example, a progress bar 2610 may be displayed on the gaze point icon 2609, and time required to fully load the progress bar 2610 is duration 4 (1100 ms). Before the progress bar is fully loaded, if it is detected that the gaze point of the user moves beyond the display range of the dynamic notification 2608, the progress bar is cleared. In addition, within duration 5 (1 second), the gaze point is not detected to return to the display range of the dynamic notification 2608, display of the dynamic notification 2608 is canceled, and the status capsule 2603 is displayed again.

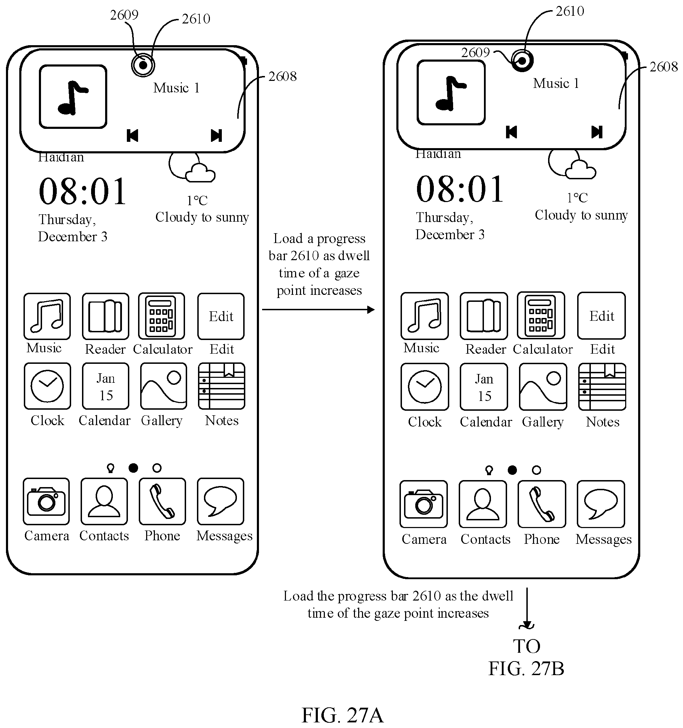

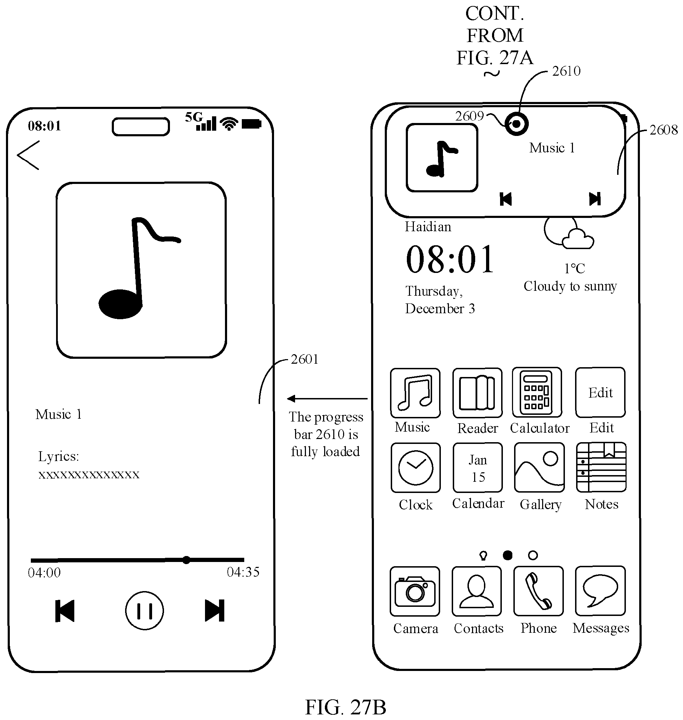

In some embodiments, as shown in FIG. 27A and FIG. 27B, when the gaze point of the user is located in the display range of the dynamic notification 2608, the progress bar 2610 is loaded based on the dwell time of the gaze point within the display range of the dynamic notification 2608. After the progress bar 2610 is fully loaded, the music playing interface 2601 corresponding to the dynamic notification 2608 is displayed.

In addition, in an eye-tracking recognition process, if it is detected that the user operates the dynamic notification 2608 through touching, by using a mouse, in a cross-device manner, or the like, eye-tracking recognition may be stopped, display of the gaze point icon 2609 is canceled until another dynamic notification appears again, eye-tracking recognition is enabled again, and the gaze point icon 2609 is displayed.

In the eye-tracking recognition process, if it is detected that the user operates a display region other than the dynamic notification 2608 through touching, by using a mouse, or in a cross-device manner, eye-tracking recognition does not stop. When it is detected that the gaze point of the user returns to the dynamic notification 2608, the progress bar 2610 of the gaze point icon 2609 is reloaded.

An embodiment of this application further provides an electronic device. The electronic device may perform the method mentioned in the foregoing embodiments. The electronic device may include a memory and one or more processors. The memory is coupled to the processor. The memory is configured to store computer program code, and the computer program code includes computer instructions. When the processor executes the computer instructions, the electronic device may be enabled to perform the steps in the foregoing embodiments. Certainly, the electronic device includes but is not limited to the memory and the one or more processors.

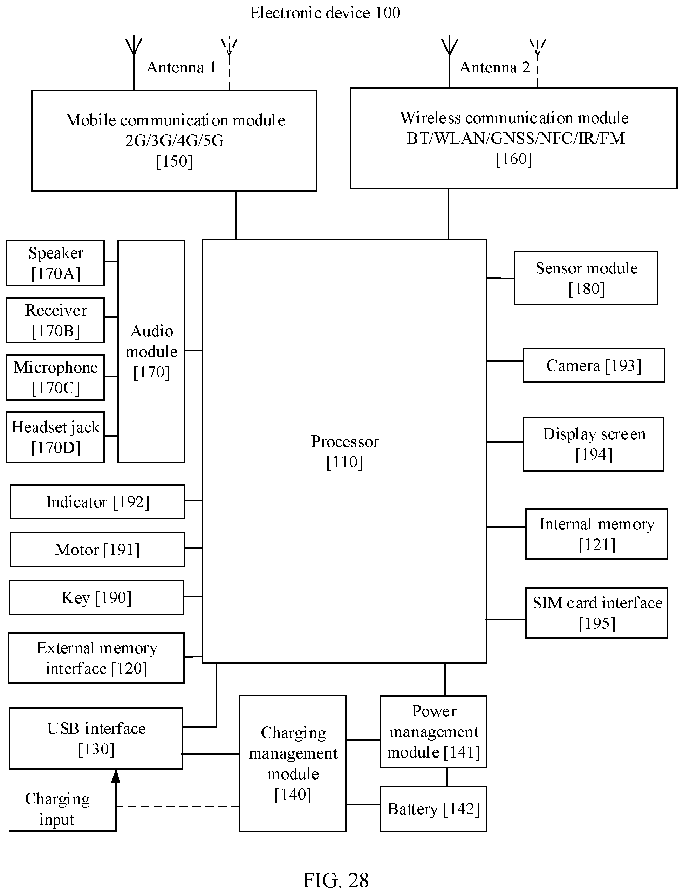

Refer to FIG. 28. FIG. 28 is a schematic diagram of a possible hardware structure of an electronic device 100.

As shown in FIG. 28, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like.

The sensor module 180 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure shown in this embodiment does not constitute a specific limitation on the electronic device 100. In some other embodiments, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and command center of the electronic device 100. The controller may generate an operation control signal based on instruction operation code and a timing signal, to complete control of instruction fetching and instruction execution.

A memory may be further disposed in the processor 110 to store instructions and data. In some embodiments, the memory in the processor 110 is a cache. The memory may store instructions or data just used or cyclically used by the processor 110. If needing to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules shown in this embodiment is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The electronic device 100 may implement a display function through the GPU, the display screen 194, the application processor, and the like. The GPU is a microprocessor for image processing, and is connected to the display screen 194 and the application processor. The GPU is configured to perform mathematical and geometric computing for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like.

The electronic device 100 may implement a shooting function by using the ISP, the camera 193, the video codec, the GPU, the display screen 194, the application processor, and the like.

The ISP is configured to process data fed back by the camera 193. For example, during photographing, a shutter is opened, light is transmitted to a photosensitive element (image sensor) of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scenario. In some embodiments, the ISP may be disposed in the camera 193.

The camera 193 is configured to capture a still image or a video. An optical image of an object is generated through a lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG)1, MPEG2, MPEG3, and MPEG4.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device 100, for example, image recognition, face recognition, voice recognition, and text understanding, may be implemented by using the NPU.

In some embodiments, a through hole configured to embed a camera is disposed on the display screen of the electronic device, that is, the front-facing camera hole described in the foregoing embodiments. The electronic device may display a first interface, for example, the main interface 1408 in FIG. 14A. A status bar (for example, the status bar 1401 in FIG. 14A and FIG. 14B) is floated and displayed above the first interface. The through hole is located in a display region of the status bar.

A first control (for example, the status capsule 1402 in FIG. 14A) is displayed on the status bar. A display region of the first control surrounds the through hole, and the first control may be a black capsule or certainly may be an interface element in another form. The first control may hide the through hole and may further display a control to push first information.

The electronic device cancels display of the first control in response to a first operation (for example, a swipe-up operation relative to the status bar) of a user. In some embodiments, the electronic device redisplays the first control on the status bar after detecting a second operation (a swipe-down operation relative to the status bar) performed by the user on the status bar.

For example, referring to FIG. 14A, FIG. 14B, and FIG. 14C, after display of the first control is canceled, the electronic device may display a notification center interface (for example, the notification center interface 1405 in FIG. 14C) in response to a second operation, where the notification center interface includes a notification card used to push the first information. The first interface is displayed in response to an operation of the user that indicates to cancel display of the notification center interface. In addition, the electronic device redisplays the first control on the status bar.

For another example, after display of the first control is canceled, the electronic device may skip, in response to the second operation, a link of displaying the notification center interface, and directly redisplay the first control on the status bar.

In some embodiments, when the first control is displayed on the status bar, the electronic device may further display a second control (for example, the status capsule 908 in FIG. 9B and the status capsule 1202 in FIG. 13B) on the status bar. The second control is overlaid on and displayed above the first control (for example, the status capsule 903 in FIG. 9A and FIG. 9B and the status capsule 1301 in FIG. 13A and FIG. 13B), where the second control is used to push second information.

For example, the second information may be status information of a target service. For example, as shown in FIG. 9A and FIG. 9B, after the user starts the taxi hailing service of the taxi hailing application, the taxi hailing service is the target service, and the status information of the taxi hailing service is the second information. In another example, the target service may alternatively be a service provided by another application, for example, a game service provided by a game application. Correspondingly, the second information may be status information of the game service. For another example, the target service is a call service provided by a call application. Correspondingly, the second information is call service information.

In the foregoing example, a second interface is displayed in response to an operation of the user that indicates to start a first application (for example, the taxi hailing application shown in FIG, 9), where the second interface is an application interface of the first application, for example, the second interface may be the taxi travel interface 905 shown in FIG. 9B. Then, the electronic device starts the target service (the taxi hailing service shown in FIG. 9A and FIG. 9B) in response to an operation performed by the user on the second interface. The electronic device detects an operation of the user that indicates to exit the second interface. The electronic device displays the second control on the status bar in response to the foregoing operation. The second control is overlaid on and displayed above the first control.

For another example, the second information may alternatively be a message that is recognized by the electronic device as needed to be pushed to the user, for example, the keyboard and mouse sharing notification in FIG. 13A and FIG. 13B, for another example, the package pickup information.

When the electronic device recognizes that the second information needs to be pushed to the user, a second dynamic notification (for example, the notification 1201 in FIG. 13B) may be displayed, where the second dynamic notification is used to push the second information. Display of the second dynamic notification is canceled after preset duration. For example, similar to the dynamic notification mentioned in the foregoing embodiments, a display region of the second dynamic notification surrounds the front-facing camera hole, is black, may hide the front-facing camera hole, has a larger display area than a status capsule, and can display more content.

In some embodiments, after the electronic device displays the overlaid first control and second control on the status bar, the electronic device cancels display of the second control and the first control in response to a swipe-up operation performed by the user relative to the second control.

In some embodiments, in a scenario in which the second information is the status information of the target service, the target service includes a first workflow node and a second workflow node (as shown in FIG. 18A and FIG. 18B, the taxi hailing service includes a "platform dispatching" node and a "driver heading to pickup" node), and content of second information corresponding to the first workflow node is different from that of second information corresponding to the second workflow node. After display of the second control and the first control is canceled, the electronic device displays a first dynamic notification (refer to the dynamic notification 1804 in FIG. 18B) in response to the target service entering the second workflow node from the first workflow node, where the first dynamic notification is used to push the second information corresponding to the second workflow node, and a display area of the first dynamic notification is greater than that of the second control. Display of the first dynamic notification is canceled and the second control (refer to the status capsule 1802 in FIG. 18A and FIG. 18B) is displayed on the status bar after the first dynamic notification is displayed for preset duration, where the second control is used to push the second information corresponding to the second workflow node.

In some embodiments, referring to FIG. 10A and FIG. 10B, for example, the first information is information whose status is updated in real time. During display of the second control on the status bar, the electronic device cancels, under a first condition, display of the second control in response to the second information being the information whose status is updated in real time. The first condition includes the following: execution of the target service ends or continuous display duration of the second control exceeds first duration (the duration 1 in the foregoing embodiments).

In some embodiments, referring to FIG. 11A, FIG. 11B, FIG. 11C, FIG. 11D, and FIG. 11E, for example, the first information is function recommendation information. The electronic device displays a target control card (the control card 1104 in FIG. 11B), where the target control card includes a target control (for example, the facial beautification strength control bar 1105 in FIG. 11B), and the target control is used to trigger a function indicated by the first information (for example, the video facial beautification function in FIG. 11A, FIG. 11B, FIG. 11C, FIG. 11D, and FIG. 11E). Display of the target control card is canceled after the target control card is displayed for preset duration. In addition, the electronic device may further display the first control on the status bar. The electronic device cancels, in response to the first information being function recommendation information, display of the first control after the first control is displayed for second duration (the duration 2).

In some embodiments, referring to FIG. 12A and FIG. 12B, for example, the second information is instant notification information. In response to the second information being instant notification information, display of the second control is canceled after the second control is displayed for second duration. The notification center interface is displayed in response to an operation of the user, where the notification center interface does not include a notification card used to push the second information. In this scenario, a notification center is exited to no longer display the second control corresponding to the second information.

For example, in a scenario in which the notification center interface does not include the notification card used to push the second information but includes a notification card used to push the first information, in response to an operation of the user that indicates to cancel display of the notification center interface, the electronic device displays the first interface, displays the first control on the status bar, and does not display the second control.

In some embodiments, referring to FIG. 15, the electronic device displays a lock screen interface and cancels display of the first control in response to an operation of the user that indicates screen locking, where the lock screen interface includes a lock screen card, and the lock screen card is used to push the first information. The first interface is displayed and display of the first control on the status bar is restored in response to an operation of the user that indicates unlocking.

Alternatively, referring to FIG. 16A and FIG. 16B, in response to an operation of the user that indicates to delete the lock screen card, display of the lock screen card is canceled before an operation of the user that indicates unlocking is detected, and the first control is not displayed on the status bar after the operation of the user that indicates unlocking is detected.

In some embodiments, referring to FIG. 20, when only the first control is displayed on the status bar, the electronic device may display a third dynamic notification (for example, the dynamic notification 2003 in FIG. 20) corresponding to the first control in response to a tap operation performed by the user on the first control. The third dynamic notification is also used to push the first information, and the third dynamic notification displays more content than that displayed by the first control. Display of the first information is canceled after the third dynamic notification is displayed, to avoid repeated information pushing.

In some embodiments, referring to FIG. 22A and FIG. 22B, the electronic device displays a small application window (the small multitask window 2204 in FIG. 22B) of a second application (for example, the taxi hailing application) in response to a third operation (a swipe-down operation relative to the third dynamic notification) performed by the user on the third dynamic notification (the dynamic notification 2203 in FIG. 22A), where the first information is information about the second application, for example, service information corresponding to a current workflow node of the taxi hailing application.

In some other embodiments, referring to FIG. 21A and FIG. 21B, when only the first control is displayed on the status bar, the electronic device displays an application interface of a second application (for example, the game application or the music application mentioned in the foregoing embodiments) in response to an operation (for example, a tap operation) performed by the user on the first control, where the first information is information about the second application.

In some embodiments, referring to FIG. 24, when only the first control and the second control are displayed on the status bar, and the second control is displayed on an upper layer, the electronic device displays a fourth dynamic notification (for example, the dynamic notification 2405 in FIG. 24) corresponding to the second control and a third dynamic notification (for example, the dynamic notification 2406 in FIG. 24) corresponding to the first control in response to an operation performed by the user on the second control.

In some embodiments, referring to FIG. 25A, FIG. 25B, and FIG. 25C, the electronic device cancels display of the fourth dynamic notification and the third dynamic notification in response to a fourth operation of the user; and displays the overlaid second control and first control on the status bar.

The fourth operation includes any one of the following: an operation indicating switching between a landscape mode and a portrait mode; an operation indicating exit; and tapping a target region, where the target region is not overlaid with display regions of the fourth dynamic notification and the third dynamic notification.

In some embodiments, referring to FIG. 26A and FIG. 26B as well as FIG. 27A and FIG. 27B, an eye-tracking cursor (for example, the gaze point icon 2606 in FIG. 26A and FIG. 26B) is displayed after the first control is displayed on the status bar.

The electronic device increases a display area of the first control in response to the eye-tracking cursor entering the display region of the first control. The electronic device displays a third dynamic notification (for example, the dynamic notification 2608 in FIG. 26B) corresponding to the first control in response to the eye-tracking cursor dwelling in the display region of the first control for third duration (the duration 3). An application interface of a second application is displayed in response to the eye-tracking cursor dwelling in a display region of the third dynamic notification for fourth duration (the duration 4).

An embodiment of this application further provides a chip system. The chip system may be applied to the electronic device in the foregoing embodiments. The chip system includes at least one processor and at least one interface circuit. The processor may be the processor in the electronic device. The processor and the interface circuit may be interconnected through a line. The processor may receive computer instructions from the memory of the electronic device through the interface circuit, and execute the computer instructions. When the computer instructions are executed by the processor, the electronic device may be enabled to perform steps in the foregoing embodiments. Certainly, the chip system may further include another discrete device. This is not specifically limited in this embodiment of this application.

In some embodiments, it may be clearly understood by a person skilled in the art through descriptions of the foregoing implementations that for ease and brevity of description, division of the foregoing functional modules is merely used as an example for description. In actual applications, the foregoing functions may be allocated to different functional modules for completion based on a requirement, that is, an internal structure of the apparatus is divided into different functional modules to complete all or some of the functions described above. For specific working processes of the system, apparatus, and unit described above, refer to corresponding processes in the method embodiments. Details are not described herein again.

In the embodiments of this application, functional units in the embodiments may be integrated into one processing unit, each of the units may exist alone physically, or two or more units may be integrated into one unit. The foregoing integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of the embodiments of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods described in the embodiments of this application. The storage medium includes any medium that can store program code, for example, a flash memory, a removable hard disk, a read-only memory, a random access memory, a magnetic disk, or an optical disc.

The foregoing descriptions are merely specific implementations of the embodiments of this application, but are not intended to limit the protection scope of the embodiments of this application. Any variation or replacement within the technical scope disclosed in the embodiments of this application shall fall within the protection scope of the embodiments of this application. Therefore, the protection scope of the embodiments of this application shall be subject to the protection scope of the claims.

## Claims

1. An information display method, applied to an electronic device, wherein the electronic device comprises a display screen, a through hole configured to embed a camera is disposed on the display screen, and the method comprises:
displaying a first interface, wherein a status bar is displayed on the first interface, and the through hole is located in a display region of the status bar;
displaying a first control on the status bar, wherein a display region of the first control surrounds the through hole, and the first control is used to push first information;
canceling display of the first control in response to a first operation of a user; and
redisplaying the first control on the status bar after a second operation performed by the user on the status bar is detected.

2. The method according to claim 1, wherein after the canceling display of the first control and before the redisplaying the first control on the status bar, the method further comprises:
displaying a notification center interface in response to the second operation, wherein the notification center interface comprises a notification card used to push the first information; and
displaying the first interface in response to an operation of the user that indicates to cancel display of the notification center interface.

3. The method according to claim 1 or 2, wherein the first operation comprises a swipe-up operation relative to the first control.

4. The method according to any one of claims 1-3, wherein after the displaying a first control on the status bar, the method further comprises:
displaying a second control on the status bar, wherein the second control is overlaid on and displayed above the first control, and the second control is used to push second information.

5. The method according to claim 4, wherein the second information comprises status information of a target service, and before the displaying a second control on the status bar, the method comprises:
displaying a second interface in response to an operation of the user that indicates to start a first application, wherein the second interface is an application interface of the first application;
starting the target service in response to an operation performed by the user on the second interface; and
detecting an operation of the user that indicates to exit the second interface.

6. The method according to claim 5, wherein the first application comprises a game application providing a game service or a taxi hailing application providing a taxi hailing service.

7. The method according to any one of claims 4-6, wherein after the displaying a second control on the status bar, the method further comprises:
canceling display of the second control and the first control in response to a swipe-up operation performed by the user relative to the second control.

8. The method according to claim 7, wherein the target service comprises a first workflow node and a second workflow node, content of second information corresponding to the first workflow node is different from content of second information corresponding to the second workflow node, and after the canceling display of the second control and the first control, the method further comprises:
displaying a first dynamic notification in response to the target service entering the second workflow node from the first workflow node, wherein the first dynamic notification is used to push the second information corresponding to the second workflow node, and a display area of the first dynamic notification is greater than that of the second control; and
canceling display of the first dynamic notification and displaying the second control on the status bar after the first dynamic notification is displayed for preset duration, wherein the second control is used to push the second information corresponding to the second workflow node.

9. The method according to claim 5 or 6, wherein the method further comprises:
canceling, under a first condition, display of the second control in response to the second information being information whose status is updated in real time, wherein
the first condition comprises the following: execution of the target service ends or continuous display duration of the second control exceeds first duration.

10. The method according to claim 1, wherein the method comprises:
canceling, in response to the first information being function recommendation information, display of the first control after the first control is displayed for second duration.

11. The method according to claim 10, wherein before the displaying a first control on the status bar, the method further comprises:
displaying a target control card, wherein the target control card comprises a target control, and the target control is used to trigger a function indicated by the first information; and
canceling display of the target control card after the target control card is displayed for preset duration.

12. The method according to claim 4, wherein the second information is a message that needs to be pushed to the user, and before the displaying a second control on the status bar, the method further comprises:
displaying a second dynamic notification, wherein the second dynamic notification is used to push the second information; and
canceling display of the second dynamic notification after preset duration.

13. The method according to claim 12, wherein the method further comprises:
canceling, in response to the second information being instant notification information, display of the second control after the second control is displayed for second duration;
displaying the notification center interface in response to an operation of the user, wherein the notification center interface does not comprise a notification card used to push the second information; and
displaying the first interface and not displaying the second control on the status bar in response to the operation of the user that indicates to cancel display of the notification center interface.

14. The method according to claim 1, wherein the method further comprises:
displaying a lock screen interface and canceling display of the first control in response to an operation of the user that indicates screen locking, wherein the lock screen interface comprises a lock screen card, and the lock screen card is used to push the first information; and
displaying the first interface and restoring display of the first control on the status bar in response to an operation of the user that indicates unlocking, or canceling, in response to an operation of the user that indicates to delete the lock screen card, display of the lock screen card before an operation of the user that indicates unlocking is detected, and not displaying the first control on the status bar after the operation of the user that indicates unlocking is detected.

15. The method according to claim 1, wherein the method further comprises:
displaying a third dynamic notification corresponding to the first control in response to an operation performed by the user on the first control, wherein the third dynamic notification is used to push the first information, and the third dynamic notification displays more content than that displayed by the first control.

16. The method according to claim 15, wherein the method further comprises:
displaying a small application window of a second application in response to a third operation performed by the user on the third dynamic notification, wherein the first information is information about the second application.

17. The method according to claim 1, wherein the method further comprises:
displaying an application interface of a second application in response to an operation performed by the user on the first control, wherein the first information is information about the second application.

18. The method according to claim 4, wherein the method further comprises:
displaying a fourth dynamic notification corresponding to the second control and a third dynamic notification corresponding to the first control in response to an operation performed by the user on the second control.

19. The method according to claim 18, wherein the method further comprises:
canceling display of the fourth dynamic notification and the third dynamic notification in response to a fourth operation of the user; and
displaying the overlaid second control and first control on the status bar.

20. The method according to claim 19, wherein the fourth operation comprises any one of the following:
an operation indicating switching between a landscape mode and a portrait mode;
an operation indicating exit; and
tapping a target region, wherein the target region is not overlaid with display regions of the fourth dynamic notification and the third dynamic notification.

21. The method according to claim 1, wherein after the displaying a first control on the status bar, the method further comprises:
displaying an eye-tracking cursor, wherein a display location of the eye-tracking cursor is a gaze location of the user on the display screen;
increasing a display area of the first control in response to the eye-tracking cursor entering the display region of the first control;
displaying a third dynamic notification corresponding to the first control in response to the eye-tracking cursor dwelling in the display region of the first control for third duration; and
displaying an application interface of a second application in response to the eye-tracking cursor dwelling in a display region of the third dynamic notification for fourth duration, wherein the first information is information about the second application.

22. An electronic device, wherein the electronic device comprises a display screen, a processor, and a memory, a through hole configured to embed a camera is disposed on the display screen, the memory is configured to store computer instructions, and when the processor executes the computer instructions, the electronic device is enabled to perform the method according to any one of claims 1-21.

23. A computer-readable storage medium, wherein the computer-readable storage medium comprises a computer program or instructions, and when the computer program or instructions are run on a computer, the computer is enabled to perform the method according to any one of claims 1-21.
